(19) **Europäisches Patentamt / European Patent Office / Office européen des brevets**

(11) **EP 4 008 757 B1**

(12) # EUROPEAN PATENT SPECIFICATION

(45) Date of publication and mention
of the grant of the patent:
**18.03.2026 Bulletin 2026/12**

(21) Application number: **20846928.8**

(22) Date of filing: **30.07.2020**

(51) International Patent Classification (IPC):
$C09D\ 175/00^{(2006.01)}$    $C08G\ 18/16^{(2006.01)}$
$C08G\ 18/28^{(2006.01)}$    $C08G\ 18/80^{(2006.01)}$
$C09D\ 7/63^{(2018.01)}$    $C08G\ 18/72^{(2006.01)}$
$C08G\ 18/75^{(2006.01)}$    $C08K\ 5/00^{(2006.01)}$
$C08G\ 18/24^{(2006.01)}$    $C08G\ 18/32^{(2006.01)}$
$C08G\ 18/42^{(2006.01)}$    $C08G\ 18/62^{(2006.01)}$
$C08G\ 18/73^{(2006.01)}$    $C09D\ 175/04^{(2006.01)}$

(52) Cooperative Patent Classification (CPC):
(C-Sets available)
C08G 18/4277; C08G 18/242; C08G 18/246;
C08G 18/3206; C08G 18/6229; C08G 18/722;
C08G 18/73; C08G 18/755; C08G 18/8064;
C08G 18/8077; C08G 18/808; C09D 175/04

(Cont.)

(86) International application number:
**PCT/JP2020/029334**

(87) International publication number:
**WO 2021/020534 (04.02.2021 Gazette 2021/05)**

(54) **BLOCKED POLYISOCYANATE COMPOSITION, ONE-COMPONENT COATING COMPOSITION, COATING FILM AND COATED ARTICLE**

BLOCKIERTE POLYISOCYANATZUSAMMENSETZUNG, EINKOMPONENTIGE BESCHICHTUNGSZUSAMMENSETZUNG, BESCHICHTUNGSFILM UND BESCHICHTETER ARTIKEL

COMPOSITION DE POLYISOCYANATE BLOQUÉ, COMPOSITION DE REVÊTEMENT MONOCOMPOSANT, FILM DE REVÊTEMENT ET ARTICLE REVÊTU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.08.2019 JP 2019142538**

(43) Date of publication of application:
**08.06.2022 Bulletin 2022/23**

(73) Proprietor: **Asahi Kasei Kabushiki Kaisha**
**Tokyo 1000006 (JP)**

(72) Inventors:
 • **SHINOMIYA, Kie**
 **Tokyo 100-0006 (JP)**
 • **TANAKA, Eiko**
 **Tokyo 100-0006 (JP)**

(74) Representative: **Strehl & Partner mbB**
**Maximilianstrasse 54**
**80538 München (DE)**

(56) References cited:
| | |
|---|---|
| EP-A1- 0 159 117 | WO-A1-2014/112165 |
| WO-A1-2018/073299 | JP-A- 2002 309 217 |
| JP-A- 2016 089 028 | JP-A- 2016 138 202 |
| JP-A- H10 330 454 | US-A1- 2003 236 360 |
| US-A1- 2012 238 697 | US-A1- 2018 282 574 |

(52) Cooperative Patent Classification (CPC): (Cont.)

C-Sets
**C08G 18/10, C08G 18/8064;**
**C08G 18/10, C08G 18/8077;**
**C08G 18/10, C08G 18/808;**
**C09D 175/04, C08K 5/098;**
**C09D 175/04, C08K 5/19**

**Description**

TECHNICAL FIELD

The present invention relates to a blocked polyisocyanate composition, a one-component coating composition, a coating film and a coated article.

BACKGROUND OF THE INVENTION

A polyurethane resin coating material conventionally has particularly excellent abrasion resistance, chemical resistance and contamination resistance. Particularly, a polyurethane resin coating material using a polyisocyanate obtained from either an aliphatic diisocyanate or an alicyclic diisocyanate has further excellent weather resistance, and the demand therefor has tended to increase.

However, a polyurethane resin coating material is generally used as a two-component composition, and therefore the use thereof is extremely inconvenient. Namely, a conventionally-used polyurethane resin coating material is composed of two components, that is, polyol and polyisocyanate, and there is a need to store the polyol and the polyisocyanate separately and to mix them when used to be coated. In addition, there is a problem in that once the polyol and the polyisocyanate are mixed, the coating material gels for a short time and cannot be used. Such a problem makes it extremely difficult to use the polyurethane resin coating material to conduct automatic coating in a field in which line coating, such as automobile coating or weak electrical coating, is conducted.

In addition, since an isocyanate readily reacts with water, the isocyanate cannot be used in an aqueous coating material such as an electrodeposition coating material. In addition, in the case where a coating material containing an isocyanate is used, there is a need to sufficiently wash a coating device and a coating tank after the end of the operation, and therefore the operating efficiency significantly deteriorates. In order to solve these problems, it has been proposed in the past to use a blocked polyisocyanate formed by blocking all active isocyanate groups by a blocking agent. The blocked polyisocyanate does not react with polyols at ordinary temperature. However, the blocking agent dissociates by heating, and active isocyanate groups regenerate and react with polyols, thereby causing a cross-linking reaction, and thus the above-mentioned problems are ameliorated. Accordingly, numerous blocking agents, such as phenol or methylethylketoxime, have been studied.

However, in the case where a blocked polyisocyanate obtained using such a blocking agent is used, a baking procedure at a high temperature of 140°C or more is generally needed. The need for such a high-temperature baking procedure is not only energetically disadvantageous, but also requires heat resistance of a substrate, which becomes a factor that limits the application thereof.

In contrast, a blocked polyisocyanate composition in which a pyrazole-based compound is used as a blocking agent (see Patent Document 1, for example) is mentioned as a blocked polyisocyanate composition that can form a cross-linked coating film at a baking temperature of 140°C or lower.

DOCUMENTS OF RELATED ART

Patent Documents

Patent Document 1: European Patent No. 0159117

WO 2018/073299 A1 discloses the production of polymers by cross-linking a polyisocyanate composition containing a blocking agent in the presence of metal-based catalysts.

US 2012/238697 A1 discloses a blocked polyisocyanate obtained by using a polyisocyanate derived from an aliphatic and/or an alicyclic diisocyanate monomer, as a precursor, and comprising both of a blocked isocyanate group blocked with a pyrazole compound and a cationic group neutralized with an anion, in one molecule thereof.

US 2003/236360 A1 discloses blocked polyisocyanates and in a comparative example, discloses a hexamethylene diisocyanate based polyisocyanate blocked with dimethylpyrazole.

WO2014/112165 A1 discloses a heat-curable composition characterized by comprising a blocked isocyanate which has been blocked with at least two types of block agents, a curing catalyst and a hydroxy-group-containing resin having a glass transition temperature (Tg) of 25 °C or lower.

US 2018/282574 A1 discloses a blocked polyisocyanate composition comprising a blocked polyisocyanate obtained from a blocking agent and a polyisocyanate derived from at least one diisocyanate selected from the group consisting of an aliphatic diisocyanate and an alicyclic diisocyanate, wherein the blocking agent comprises at least one selected from the group consisting of a malonic acid diester compound having a specific structure and a β-ketoester compound having a specific structure.

JP 2016 089028 A discloses a block isocyanate composition containing a compound having two or more active hydrogens in a molecule, a block polyisocyanate compound, a block isocyanate dissociation catalyst and a strong acid having acid dissociation constant (pKa) of 2 or less.

JP 2016 138202 A discloses a thermosetting coating composition consisting of a metal catalyst, a hydroxyl group-containing resin, a block isocyanate curing agent and an amine compound.

JP H10 330454 A discloses a blocked polyisocyanate composition having high emulsifying properties obtained by reacting a polyisocyanate composition obtained by introducing a nonionic hydrophilic group containing 5 to 50 ethylene oxide repeating units into an aliphatic and/or alicyclic diisocyanate, or a polyisocyanate compound obtained from such a compound, to form a hydrophilic polyisocyanate, and then mixing of an ionic surfactant substantially containing no water with the hydrophilic polyisocyanate, with the polyisocyanate composition, and a compound having active hydrogen.

## SUMMARY OF THE INVENTION

### PROBLEMS TO BE SOLVED BY THE INVENTION

However, the protection of the global environment and the adaptation to plastic having a low heat resistance have been strongly demanded and a blocked polyisocyanate composition that can be cured at a temperature lower than 100°C has been desired in recent years.

The present invention has been made under the aforementioned circumstances, and provides a blocked polyisocyanate composition which exhibits favorable curability at a low temperature when made into a coating film, a one-component coating composition using the blocked polyisocyanate composition, as well as a coating film and a coated article using the one-component coating composition.

### MEANS TO SOLVE THE PROBLEMS

The present invention is set out in the appended claims.

### EFFECTS OF THE INVENTION

The blocked polyisocyanate composition and the one-component coating composition of the embodiment make it possible to provide a blocked polyisocyanate composition and a one-component coating composition having favorable curability at a low temperature when made into a coating film. The coating film of the embodiment is formed by curing the one-component coating composition and exhibits favorable curability at a low temperature. The coated article of the embodiment includes the coating film having favorable curability at a low temperature.

### EMBODIMENTS FOR CARRYING OUT THE INVENTION

An embodiment in which the present invention is carried out (hereinafter, abbreviated as "embodiment") will be described specifically below.

In the present specification, the term "polyol" refers to a compound having at least two hydroxy groups (-OH).

In the present specification, the term "polyisocyanate" refers to a reactant in which a plurality of monomer compounds having at least one isocyanate group (-NCO) (hereinafter abbreviated as "isocyanate monomer") is bound.

<<Blocked polyisocyanate composition>>

A blocked polyisocyanate composition according to the present invention includes: a blocked polyisocyanate derived from a polyisocyanate and a blocking agent; and at least one organic acid salt, in which the blocking agent includes a compound having a heterocyclic ring containing at least three nitrogen atom.

The blocked polyisocyanate derived from a polyisocyanate and a blocking agent is a reactant obtained from the polyisocyanate and the blocking agent, and at least some (preferably all) of the isocyanate groups of the polyisocyanate are blocked by the blocking agent.

The blocking agent includes a compound having a heterocyclic ring containing at least three nitrogen atoms.

The above-mentioned constitution of the blocked polyisocyanate composition of the embodiments makes the curability at a low temperature when made into a coating film favorable.

Hereinafter, the constituent components of the blocked polyisocyanate composition of the above-mentioned embodiments will be explained specifically.

<Blocked polyisocyanate>

The blocked polyisocyanate is a blocked polyisocyanate derived from a polyisocyanate and a blocking agent.

[Polyisocyanate]

The polyisocyanate is a reactant obtained by reacting a plurality of monomer compounds having at least two isocyanate groups (-NCO) (hereinafter, may be abbreviated as "isocyanate monomers").

The carbon number of the isocyanate monomer is preferably 4 to 30. Specific examples of the isocyanate monomer include the following compounds. These isocyanate monomers may be used alone, or at least two thereof may be used in combination.

(1) Aromatic diisocyanates such as diphenylmethane-4,4'-diisocyanate (MDI), 1,5-naphthalene diisocyanate, tollylene diisocyanate (TDI), xylylene diisocyanate, and m-tetramethylxylylene diisocyanate (TMXDI);

(2) aliphatic diisocyanates such as 1,4-tetramethylene diisocyanate, 1,6-hexamethylene diisocyanate (hereinafter, may be abbreviated as "HDI"), 2,2,4-trimethyl-1,6-diisocyanatohexane, 2,4,4-trimethyl-1,6-hexamethylene diisocyanate, 2-methylpentane-1,5-diisocyanate (MPDI), and lysine diisocyanate (hereinafter, may be abbreviated as "LDI");

(3) alicyclic diisocyanates such as isophorone diisocyanate (hereinafter, may be abbreviated as "IPDI"), 1,3-bis(diisocyanatemethyl)cyclohexane, 4,4'-dicyclohexylmethane diisocyanate, diisocyanate norbornane, and di(isocyanatemethyl)norbornane; and

(4) triisocyanates such as 4-isocyanatemethyl-1,8-octamethylene diisocyanate (hereinafter, may be abbreviated as "NTI"), 1,3,6-hexamethylene triisocyanate (hereinafter, may be abbreviated as "HTI"), bis(2-isocyanatoethyl) 2-isocyanatoglutarate (hereinafter, may be abbreviated as "GTI"), and lysine triisocyanate (hereinafter, may be abbreviated as "LTI").

Among these, at least one diisocyanate selected from the group consisting of the aliphatic diisocyanates and the alicyclic diisocyanates is preferably used as the isocyanate monomer, since the weather resistance of the resultant coating film becomes favorable. HDI or IPDI is more preferably used as the isocyanate monomer from the viewpoint of ease of industrial availability.

Although any of the aliphatic diisocyanates and the alicyclic diisocyanates may be used alone or in combination as the isocyanate monomer(s), it is preferable that one of the aliphatic diisocyanates be used alone, or the combination of the aliphatic diisocyanate and the alicyclic diisocyanate be used, and it is more preferable that HDI be used alone, or both HDI and IPDI be used. The use of the combination of the aliphatic diisocyanate and the alicyclic diisocyanate makes it possible to further improve the toughness and the elasticity of the resultant coating film.

In the case where both the aliphatic diisocyanate and the alicyclic diisocyanate are used in the polyisocyanate of the present embodiment, the mass ratio of the structural unit derived from the aliphatic diisocyanate to the structural unit derived from the alicyclic diisocyanate is preferably 50/50 to 95/5, more preferably 60/40 to 90/10, and even more preferably 70/30 to 80/20.

In the case where the mass ratio of the structural unit derived from the aliphatic diisocyanate to the structural unit derived from the alicyclic diisocyanate is the lower limit or more, the decrease in the flexibility of the resultant coating film can be effectively suppressed. In the case where the mass ratio of the structural unit derived from the aliphatic diisocyanate to the structural unit derived from the alicyclic diisocyanate is the upper limit or less, the hardness of the resultant coating film can be further increased.

The mass ratio of the structural unit derived from the aliphatic diisocyanate to the structural unit derived from the alicyclic diisocyanate can be determined by the following method. First, the unreacted aliphatic diisocyanate mass and the unreacted alicyclic diisocyanate mass are calculated from the unreacted diisocyanate mass after reaction and the aliphatic diisocyanate concentration and the alicyclic diisocyanate concentration in the unreacted diisocyanates determined by gas chromatography analysis. Then, the unreacted aliphatic diisocyanate mass and the unreacted alicyclic diisocyanate mass, determined by the above-mentioned calculation, are subtracted from the charged aliphatic diisocyanate mass and the charged alicyclic diisocyanate mass, respectively, to obtain differences as the mass of the structural unit derived from the aliphatic diisocyanate and the mass of the structural unit derived from the alicyclic diisocyanate, respectively. Then, the mass of the structural unit derived from the aliphatic diisocyanate is divided by the mass structural unit derived from the alicyclic diisocyanate to obtain the mass ratio of the structural unit derived from the aliphatic diisocyanate to the structural unit derived from the alicyclic diisocyanate.

Although specific examples of the polyisocyanate derived from the isocyanate monomers include the following compounds (1) to (8), the polyisocyanate is not limited to these compounds.

(1) Polyisocyanate compounds having a uretdione structure obtained by cyclodimerization of two isocyanate groups.

(2) Polyisocyanate compounds having an isocyanurate structure or an iminooxadiazinedione structure obtained by cyclotrimerization of three isocyanate groups.

(3) Polyisocyanate compounds having a biuret structure obtained by reaction of three isocyanate groups and one water molecule.

(4) Polyisocyanate compounds having an oxadiazine trion structure obtained by reaction of two isocyanate groups and one carbon dioxide molecule.

(5) Polyisocyanate compounds having a plurality of urethane groups obtained by reaction of one isocyanate group and one hydroxyl group.

(6) Polyisocyanate compounds having an allophanate structure obtained by reaction of two isocyanate groups and one hydroxy group.

(7) Polyisocyanate compounds having an acylurea group obtained by reaction of one isocyanate group and one carboxy group.

(8) Polyisocyanate compounds having a urea structure obtained by reaction of one isocyanate group and one primary or secondary amine.

Namely, examples of the polyisocyanate include, in addition to the above-mentioned polyisocyanates derived from the isocyanate monomers, polyisocyanates which are reactants obtained by reacting a plurality of isocyanate monomers (such as the above-mentioned diisocyanates) and compounds other than the above-mentioned isocyanate monomers (such as alcohol, water, or amine).

In the polyisocyanate according to the present embodiment, the molar ratio of urethane group to allophanate group (urethane group / allophanate group) is preferably 0/10 to 2/8, and more preferably 0/10 to 1/9. In the case where the ratio, urethane group / allophanate group, is within the above-mentioned range, the curability at a low temperature when made into a coating film is further improved.

The ratio, urethane group / allophanate group, may be calculated by the following method, for example.

13C-NMR is measured using Biospin Avance 600 (trade name) manufactured by Bruker under the following conditions.

(Measurement conditions)

| 13C-NMR apparatus: | AVANCE 600 (manufactured by Bruker) |
| | Cryo Probe (manufactured by Bruker) |
| | CPDUL |
| | 600S3-C/H-D-05Z |
| Resonance frequency: | 150 MHz |
| Concentration: | 60 wt/vol% |
| Sift standard: | CDCl3 (77 ppm) |
| Cumulated number: | 10,000 |
| Pulse program: | zgpg 30 (proton complete decoupling method, latency: two seconds) |

Then, the integral value of the following signal obtained from the measurement result is divided by the number of carbons measured to obtain the molar amount of each functional group. Then, the resultant molar amount of urethane group is divided by the resultant molar amount of allophanate group to determine the ratio, urethane group / allophanate group.

Allophanate group: Integral value around 154 ppm ÷ 1 (carbon number)

Urethane group: Integral value around 156.5 ppm ÷ 1 (carbon number) - integral value of allophanate group

The polyisocyanate may be a polyisocyanate having an isocyanurate group composed of three diisocyanate molecules (hereinafter, may be abbreviated as "isocyanurate trimer"). The amount of the isocyanurate trimer relative to the total mass of the polyisocyanate is preferably 8% by mass or more, more preferably 10% by mass or more, and even more preferably 12% by mass or more.

The amount of the isocyanurate trimer may be determined by the following method, for example.

The polyisocyanate to be used to prepare a blocked polyisocyanate composition is subjected to gel permeation chromatography (GPC) analysis. Then, the area ratio of isocyanurate trimer relative to the area of total components is determined from the obtained measurement results as the amount of the isocyanurate trimer in the components.

The polyisocyanate is preferably a polyisocyanate derived from the above-mentioned isocyanate monomer and a polymerizable alcohol having a number-average molecular weight of 400 to 5,000 and an average hydroxyl group number of 3 to 8. The term "polymerizable alcohol" refers to an alcohol obtained by polymerization of monomers having a polymerizable group and a hydroxyl group. In contrast, the term "non-polymerizable alcohol" refers to an alcohol free from any polymerizable groups.

In addition, the polyisocyanate derived from the isocyanate monomer and the polymerizable alcohol preferably satisfies the following conditions (1) to (3).

(1) The amount of structural unit derived from the polymerizable alcohol relative to the total mass of the polyisocyanate is 22% by mass to 80% by mass.
(2) The average number of isocyanate functional groups is 3.0 to 20.
(3) The ratio, weight-average molecular weight (Mw) / number-average molecular weight (Mn), is 3.5 to 15.

In condition (1), the amount of structural unit derived from the polymerizable alcohol (hereinafter, may be abbreviated as "PO amount") relative to the total mass of the polyisocyanate is preferably 22% by mass to 80% by mass, more preferably 22% by mass to 75% by mass, even more preferably 30% by mass to 75% by mass, and particularly preferably 35% by mass to 75% by mass.

In the case where the PO amount is within the above-mentioned range, the adhesiveness against a coated object and the curability at a low temperature when made into a coating film are further improved.

The PO amount can be calculated by the following formula.

$$\text{PO amount (\% by mass)} = \text{charged PO mass} / \text{resultant polyisocyanate mass} \times 100$$

In conditions (2), the average number of isocyanate functional groups is preferably 3.5 to 20, more preferably 4.0 to 15, even more preferably 4.5 to 10, and particularly preferably 5.0 to 9.0.

In the case where the average number of isocyanate functional groups is within the above-mentioned range, the reactivity with a hydroxyl group of the main agent becomes further favorable.

The average number of isocyanate functional groups can be determined by the method mentioned in the examples below.

In condition (3), the Mw/Mn is preferably 3.0 to 15, more preferably 3.5 to 12, even more preferably 3.5 to 11, and particularly preferably 4.0 to 11.

In the case where the Mw/Mn is within the above-mentioned range, the adhesiveness against a coated object and the curability at a low temperature when made into a coating film is further improved.

The Mw/Mn of the polyisocyanate is determined using values of Mw and Mn obtained by GPC measurement. Specifically, the Mw/Mn may be calculated by the method mentioned in the examples below.

In the case where the polyisocyanate derived from the isocyanate monomer and the polymerizable alcohol satisfies the above-mentioned conditions (1) to (3), the structure thereof has high flexibility, and the cross-linked structure is easily formed when mixed with the main agent, and therefore the curability at a low temperature when made into a coating film is further excellent.

The above-mentioned polyisocyanates may be used alone or at least two thereof may be used in combination.

(Polymerizable alcohol)

It is preferable that the polymerizable alcohol be a polyol having a number-average molecular weight of 400 to 5,000, and have an average hydroxyl group number of 3 to 8.

The number-average molecular weight of the polymerizable alcohol is preferably 400 or more and 5,000 or less, more preferably more than 500 and 5,000 or less, even more preferably 550 or more and 4,500 or less, and particularly preferably 850 or more and 4,000 or less.

In the case where the number-average molecular weight of the polymerizable alcohol is within the above-mentioned range, the polyisocyanate derived from the isocyanate monomer and a polymerizable alcohol forms a structure having high flexibility, and easily forms a cross-linked structure when mixed with the main agent, and therefore the curability at a low temperature when made into a coating film is excellent.

The average hydroxyl group number of the polymerizable alcohol is preferably 3 to 8, more preferably 3 to 6, even more preferably 3 to 5, and particularly preferably 3 or 4.

Specific examples of the polymerizable alcohol include polyester polyols, polyether polyols, acrylic polyols, and polyolefin polyols.

The polyester polyol may be obtained, for example, by condensation reaction of either one dibasic acid or a mixture of at least two thereof with either one polyhydric alcohol or a mixture of at least two thereof.

Examples of the dibasic acid include carboxylic acids such as succinic acid, adipic acid, dimer acid, maleic anhydride, phthalic anhydride, isophthalic acid, terephthalic acid, and 1,4-cyclohexanedicarboxylic acid.

Examples of the polyhydric alcohol include ethylene glycol, propylene glycol, diethylene glycol, 1,4-butanediol, neopentyl glycol, 1,6-hexanediol, trimethylpentanediol, cyclohexanediol, trimethylolpropane, glycerin, pentaerythritol, 2-methylolpropanediol, and ethoxylated trimethylolpropane.

The polyester polyol may be prepared, for example, by mixing the above-mentioned components and heating the mixture at about 160°C to 220°C to allow condensation reaction to proceed. Alternatively, polycaprolactones obtained by ring-opening polymerization of lactones such as ε-caprolactone using a polyhydric alcohol may also be used as the polyester polyols, for example.

It is preferable that the polyester polyols obtained by the above-mentioned preparation method be denatured using an aliphatic diisocyanate, an alicyclic diisocyanate, or a compound obtained therefrom, from the viewpoint of weather resistance and yellowing resistance of the resultant coating film.

The polyether polyol may be obtained by any of the following methods (1) to (3), for example.

(1) A method of obtaining polyether polyols by random or block addition of either one alkylene oxide or a mixture of alkylene oxides to either one polyvalent hydroxy compound or a mixture of polyvalent hydroxy compounds using a catalyst.

Examples of the catalyst include hydroxides of lithium, sodium, or potassium, strong basic catalysts, and composite metal cyanide complex. Examples of the strong basic catalyst include alcoholates, and alkylamines. Examples of the composite metal cyanide complex include metal porphyrin, and zinc hexacyanocobaltate complexes.

Examples of the alkylene oxide include ethylene oxide, propylene oxide, butylene oxide, cyclohexene oxide, and styrene oxide.

(2) A method of obtaining polyether polyols by reacting an alkylene oxide with a polyamine compound.

Examples of the polyamine compound include ethylenediamine.

Examples of the alkylene oxide include the compounds mentioned in the method (1).

(3) A method of obtaining polymer polyols by polymerizing acrylamide using as a medium the polyether polyol obtained by the method (1) or (2).

Examples of the polyvalent hydroxyl compound include the following compounds (i) to (vi).

(i) Diglycerin, ditrimethylolpropane, pentaerythritol, and dipentaerythritol;
(ii) sugar alcohol-based compounds such as erythritol, D-threitol, L-arabinitol, ribitol, xylitol, sorbitol, mannitol, galactitol, and rhamnitol;
(iii) monosaccharides such as arabinose, ribose, xylose, glucose, mannose, galactose, fructose, sorbose, rhamnose, fucose, and ribodesose;
(iv) disaccharides such as trehalose, sucrose, maltose, cellobiose, gentiobiose, lactose, and melibiose;
(v) trisaccharides such as raffinose, gentianose, and melicitose; and
(vi) tetrasaccharides such as stachyose.

Although the acrylic polyols are not particularly limited, examples thereof include copolymers of either one ethylenically unsaturated bond-containing monomer having a hydroxyl group or a mixture thereof with either another ethylenically unsaturated bond-containing monomer copolymerizable therewith or a mixture of other ethylenically unsaturated bond-containing monomers copolymerizable therewith.

Although the ethylenically unsaturated bond-containing monomer having a hydroxyl group is not particularly limited, examples thereof include hydroxyethyl acrylate, hydroxypropyl acrylate, hydroxybutyl acrylate, hydroxyethyl methacrylate, hydroxypropyl methacrylate, and hydroxybutyl methacrylate.

Although the other ethylenically unsaturated bond-containing monomer or monomers copolymerizable with the ethylenically unsaturated bond-containing monomer having a hydroxyl group are not particularly limited, examples thereof include acrylic esters, methacrylic esters, unsaturated carboxylic acids, unsaturated amides, vinyl-based monomers, and vinyl-based monomers having a hydrolyzable silyl group.

Examples of the acrylic esters include methyl acrylate, ethyl acrylate, propyl acrylate, isopropyl acrylate, n-butyl acrylate, isobutyl acrylate, n-hexyl acrylate, cyclohexyl acrylate, 2-ethylhexyl acrylate, lauryl acrylate, benzyl acrylate, and phenyl acrylate.

Examples of the methacrylic esters include methyl methacrylate, ethyl methacrylate, propyl methacrylate, isopropyl methacrylate, n-butyl methacrylate, isobutyl methacrylate, n-hexyl methacrylate, cyclohexyl methacrylate, 2-ethylhexyl methacrylate, lauryl methacrylate, benzyl methacrylate, and phenyl methacrylate.

Examples of the unsaturated carboxylic acids include acrylic acid, methacrylic acid, maleic acid, and itaconic acid.

Examples of the unsaturated amides include acrylamide, methacrylamide, N,N-methylene bisacrylamide, diacetone acrylamide, diacetone methacrylamide, maleic acid amide, and maleimide.

Examples of the vinyl-based monomers include glycidyl methacrylate, styrene, vinyl toluene, vinyl acetate, acrylonitrile, and dibutyl fumarate.

Examples of the vinyl-based monomers having a hydrolyzable silyl group include vinyltrimethoxysilane, vinylmethyldimethoxysilane, and γ-(meth)acryloxypropyltrimethoxysilane.

Examples of the polyolefin polyols include polybutadienes having hydroxy group terminals, and hydrogen additives thereof.

Among these, the polymerizable alcohol is preferably a polyester polyol, and more preferably a polycaprolactone polyol obtained by ring-opening polymerization of ε-caprolactone using a polyol having a low molecular weight.

(Preparation method of polyisocyanate)

The preparation method of the polyisocyanate will be explained below specifically.

The polyisocyanate may be prepared by, for example, simultaneously conducting an allophanate-forming reaction to form an allophanate group, a uretdione-forming reaction to form a uretdione group, an iminooxadiazinedione-forming reaction to form an iminooxadiazinedione group, an isocyanurate-forming reaction to form an isocyanurate group, a urethane-forming reaction to form a urethane group, and a biuret-forming reaction to form a biuret group in the presence of an excess amount of isocyanate monomers, followed by removing unreacted isocyanate monomers after the end of the reactions. Namely, the polyisocyanate obtained by the above-mentioned reactions is formed by bonding a plurality of the above-mentioned isocyanate monomers, and is a reactant having at least one selected from the group consisting of an allophanate group, a uretdione group, an iminooxadiazinedione group, an isocyanurate group, a urethane group and a biuret group.

Alternatively, the above-mentioned reactions may be conducted separately, and then the resultant polyisocyanates may be mixed at a particular ratio.

It is preferable that the above-mentioned reactions be conducted simultaneously to obtain the polyisocyanate from the viewpoint of convenience in preparation, and that the above-mentioned reactions be conducted separately and then the resultant polyisocyanates be mixed so as to freely adjust the molar ratio of each functional group.

(1) Preparation method of allophanate group-containing polyisocyanate

An allophanate group-containing polyisocyanate may be obtained by adding an alcohol to an isocyanate monomer, and using an allophanate-forming reaction catalyst.

Examples of the alcohol to be used to form an allophanate group include alcohols composed of only carbon, hydrogen and oxygen.

Although the alcohol is not limited to the following compounds, specific examples thereof include monoalcohols and dialcohols. One of these alcohols may be used alone or at least two thereof may be used in combination.

Examples of the monoalcohols include methanol, ethanol, propanol, butanol, pentanol, hexanol, heptanol, octanol, and nonanol.

Examples of the dialcohols include ethylene glycol, 1,3-butanediol, neopentyl glycol, and 2-ethylhexanediol.

Among these, the alcohol is preferably a monoalcohol, and more preferably a monoalcohol having a molecular weight of 200 or less.

Although the allophanate-forming reaction catalyst is not limited to the following compound, examples thereof include salts of alkylcarboxylic acids, such as tin salts, lead salts, zinc salts, bismuth salts, zirconium salts, and zirconyl salts.

Examples of the tin salts of alkylcarboxylic acid (organic tin compounds) include tin 2-ethylhexanoate, and dibutyltin dilaurate.

Examples of the lead salts of alkylcarboxylic acid (organic lead compounds) include lead 2-ethylhexanoate.

Examples of the zinc salts of alkylcarboxylic acid (organic zinc compounds) include zinc 2-ethylhexanoate.

Examples of the bismuth salts of alkylcarboxylic acid include bismuth 2-ethylhexanoate.

Examples of the zirconium salts of alkylcarboxylic acid include zirconium 2-ethylhexanoate.

Examples of the zirconyl salts of alkylcarboxylic acid include zirconyl 2-ethylhexanoate.

One of these catalysts may be used alone or at least two thereof may be used in combination.

The below-mentioned isocyanurate-forming reaction catalyst also serves as the allophanate-forming reaction catalyst. In the case where the below-mentioned isocyanurate-forming reaction catalyst is used to conduct an allophanate-forming reaction, an isocyanurate-type polyisocyanate is generated as a matter of course.

Among these, it is preferable that the below-mentioned isocyanurate-forming reaction catalyst be used as the allophanate-forming reaction catalyst to allow both the allophanate-forming reaction and the isocyanurate-forming reaction to proceed so as to conduct preparation economically.

The lower limit of the above-mentioned allophanate-forming reaction catalyst to be used relative to the mass of charged isocyanate monomers is preferably 10 ppm by mass, more preferably 20 ppm by mass, even more preferably 40 ppm by mass, and particularly preferably 80 ppm by mass.

The upper limit of the above-mentioned allophanate-forming reaction catalyst to be used relative to the mass of charged isocyanate monomers is preferably 1,000 ppm by mass, more preferably 800 ppm by mass, even more preferably 600 ppm by mass, and particularly preferably 500 ppm by mass.

Namely, the amount of the above-mentioned allophanate-forming reaction catalyst to be used relative to the mass of charged isocyanate monomer is preferably 10 ppm by mass to 1,000 ppm by mass, more preferably 20 ppm by mass to 800 ppm by mass, even more preferably 40 ppm by mass to 600 ppm by mass, and particularly preferably 80 ppm by mass to 500 ppm by mass.

The lower limit of the allophanate-forming reaction temperature is preferably 40°C, more preferably 60°C, even more preferably 80°C, and particularly preferably 100°C.

The upper limit of the allophanate-forming reaction temperature is preferably 180°C, more preferably 160°C, and even more preferably 140°C.

Namely, the allophanate-forming reaction temperature is preferably 40°C to 180°C, more preferably 60°C to 160°C, even more preferably 80°C to 140°C, and particularly preferably 100°C to 140°C.

In the case where the allophanate-forming reaction temperature is the lower limit or more, the reaction rate can be further improved. In the case where the allophanate-forming reaction temperature is the upper limit or less, coloring of the polyisocyanate tends to be further effectively suppressed.

(2) Preparation method of a uretdione group-containing polyisocyanate

In the case where a uretdione group-containing polyisocyanate is derived from isocyanate monomers, the uretdione group-containing polyisocyanate may be prepared by multimerization of the isocyanate monomers using a uretdione-forming reaction catalyst or heating, for example.

Although the uretdione-forming reaction catalyst is not particularly limited, examples thereof include tert-phosphines such as trialkylphosphines, tris(dialkylamino)phosphines, and cycloalkylphosphines, and Lewis acids.

Examples of the trialkylphosphines include tri-n-butylphosphine, and tri-n-octylphosphine.

Examples of the tris(dialkylamino)phosphines include tris-(dimethylamino)phosphine.

Examples of the cycloalkylphosphines include cyclohexyl-di-n-hexylphosphine.

Examples of the Lewis acids include boron trifluoride and acidic zinc chloride.

Many uretdione-forming reaction catalysts can promote an isocyanurate-forming reaction simultaneously.

In the case where the uretdione-forming reaction catalyst is used, the uretdione-forming reaction is preferably terminated by adding a deactivator against the uretdione-forming reaction catalyst, such as a phosphoric acid or a methyl paratoluenesulfonate, to the resultant when the desired yield is obtained.

In the case where a uretdione group-containing polyisocyanate is prepared by heating at least one diisocyanate selected from the group consisting of the above-mentioned aliphatic diisocyanates and the above-mentioned alicyclic diisocyanates without using any uretdione-forming reaction catalysts, the heating temperature is preferably 120°C or more, and more preferably 150°C to 170°C. The heating time is preferably one hour to four hours.

(3) Preparation method of an iminooxadiazinedione group-containing polyisocyanate

In the case where an iminooxadiazinedione group-containing polyisocyanate is derived from isocyanate monomers, an iminooxadiazinedione-forming reaction catalyst is usually used.

Examples of an iminooxadiazinedione-forming catalyst include the following compounds 1) and 2).

1) (Poly)hydrogen fluorides of general formula: $M[F_n]$ or $M[F_n(HF)_m]$ (wherein m and n are each an integer satisfying the relationship $m/n>0$, and M is an n-charged cation (mixture) or at least one radical having a valence of n in total).
2) Compounds formed of compounds of general formula: $R^1\text{-}CR'_2\text{-}C(O)O\text{-}$ or $R^2\text{=}CR'\text{-}C(O)O\text{-}$ and either quaternary ammonium cations or quaternary phosphonium cations.

(In the formulae, $R^1$ and $R^2$ are each independently a linear, branched, or cyclic, saturated or unsaturated C1-30 perfluoroalkyl group, and plural R' is each independently selected from the group consisting of a hydrogen atom, and C1-20 alkyl groups which may include a hetero atom and aryl groups.)

Specific examples of the compounds 1) ((poly)hydrogen fluorides) include tetramethylammonium fluoride hydrate and tetraethylammonium fluoride

Specific examples of the compounds 2) include 3,3,3-trifluorocarboxylic acid, 4,4,4,3,3-pentafluorobutane acid, 5,5,5,4,4,3,3-heptafluoropentanoic acid, and 3, 3-difluoroprop-2-enoic acid.

Among these, the compounds (1) are preferable from the viewpoint of ease of availability and the compounds (2) are preferable from the viewpoint of safety.

Although the lower limit of the amount of the iminooxadiazinedione-forming catalyst to be used is not particularly limited, the lower limit of the mass ratio of the iminooxadiazinedione-forming catalyst to be used relative to the mass of charged isocyanate monomers is preferably 5 ppm, more preferably 10 ppm, and even more preferably 20 ppm, from the viewpoint of the reactivity.

The upper limit of the mass ratio of the iminooxadiazinedione-forming catalyst to be used relative to the mass of charged isocyanate monomers is preferably 5,000 ppm, more preferably 2,000 ppm, and even more preferably 500 ppm, from the viewpoint of suppressibility of coloring and change in color of the resultant products and reaction controllability.

Namely, the mass ratio of the iminooxadiazinedione-forming catalyst to be used relative to the mass of charged isocyanate monomers is preferably 5 ppm to 5,000 ppm, more preferably 10 ppm to 2,000 ppm, and even more preferably 20 ppm to 500 ppm.

Although the lower limit of the iminooxadiazinedione-forming reaction temperature is not particularly limited, the lower limit is preferably 40°C, more preferably 50°C, and even more preferably 60°C, from the viewpoint of the reaction rate.

The upper limit of the iminooxadiazinedione-forming reaction temperature is preferably 150°C, more preferably 120°C, and even more preferably 110°C, from the viewpoint of suppressibility of coloring and change in color of the resultant products.

Namely, the iminooxadiazinedione-forming reaction temperature is preferably 40°C to 150°C, more preferably 50°C to 120°C, and even more preferably 60°C to 110°C.

The iminooxadiazinedione-forming reaction may be terminated when the desired iminooxadiazinedione group amount is obtained. The iminooxadiazinedione-forming reaction may be terminated by, for example, adding an acidic compound to the reaction liquid. Examples of the acidic compound include phosphoric acid, acidic phosphoric acid ester, sulfuric acid, hydrochloric acid, and sulfonic acid compounds. The iminooxadiazinedione-forming reaction catalyst is inactivated by neutralization by the acidic compound, or thermal decomposition or chemical decomposition. After the reaction is terminated, filtration is conducted, as needed.

(4) Preparation method of isocyanurate group-containing polyisocyanate

Examples of a catalyst to be used to obtain an isocyanurate group-containing polyisocyanate from isocyanate monomers include generally used isocyanurate-forming reaction catalysts.

Although the isocyanurate-forming reaction catalyst is not particularly limited, it is generally preferable that the isocyanurate-forming reaction catalyst have a basic group. Specific examples of the isocyanurate-forming reaction catalyst include the following compounds.

(1) Hydroxides of tetraalkylammonium such as tetramethylammonium, tetraethylammonium, or tetrabutylammonium; and organic weak acid salts of tetraalkylammonium, such as acetate salts, propionate salts, octylate salts, caprate salts, myristate salts, and benzoate salts.

(2) Hydroxides of aryltrialkylammonium such as benzyltrimethylammonium or trimethylphenylammonium; and organic weak acid salts of aryltrialkylammonium, such as acetate salts, propionate salts, octylate salts, caprate salts, myristate salts, and benzoate salts.

(3) Hydroxides of hydroxyalkylammonium such as trimethylhydroxyethylammonium, trimethylhydroxypropylammonium, triethylhydroxyethylammonium, or triethylhydroxypropylammonium; and organic weak acid salts of hydroxyalkylammonium, such as acetate salts, propionate salts, octylate salts, caprate salts, myristate salts, and benzoate salts

(4) Metal (such as tin, zinc, or lead) salts of alkylcarboxylic acids such as acetic acid, propionic acid, caproic acid, octylic acid, capric acid, or myristic acid.

(5) Metal alcoholates such as sodium alcoholates, and potassium alcoholates.

(6) Aminosilyl group-containing compounds such as hexamethylene disilazane.

(7) Mannich bases.

(8) Mixture of tertiary amines and epoxy compounds

(9) Phosphorus-based compounds such as tributylphosphine.

Among these, the hydroxides of quaternary ammonium or the organic weak acid salts thereof, and more preferably the hydroxides of tetraalkylammonium, the organic weak acid salts of tetraalkylammonium, the hydroxides of aryltrialkylammonium, or the organic weak acid salts of aryltrialkylammonium are preferable as the isocyanurate-forming reaction catalysts from the viewpoint of difficulty in unnecessary by-product generation.

The upper limit of the amount of the above-mentioned isocyanurate-forming reaction catalyst to be used relative to the mass of charged isocyanate monomers is preferably 1,000 ppm by mass, more preferably 500 ppm by mass, and even more preferably 100 ppm by mass.

In contrast, although the lower limit of the amount of the above-mentioned isocyanurate-forming reaction catalyst to be used is not particularly limited, the lower limit may be 10 ppm by mass, for example.

The isocyanurate-forming reaction temperature is preferably 50°C to 120°C, and more preferably 60°C to 90°C. In the case where the isocyanurate-forming reaction temperature is the upper limit or less, the coloring of the polyisocyanate tends to be further effectively suppressed.

The isocyanurate-forming reaction is terminated by adding an acidic compound (such as a phosphoric acid or an acidic phosphoric acid ester) to the resultant when a desired conversion rate (mass ratio of the polyisocyanate formed by the isocyanurate-forming reaction, relative to the mass of charged isocyanate monomers) is obtained.

The reaction needs to be terminated at an initial stage to obtain the polyisocyanate. However, the reaction rate of the isocyanurate-forming reaction at an initial stage is very rapid, and therefore the termination of the reaction at the initial stage is difficult, and reaction conditions, particularly, the addition amount and the addition method of a catalyst, are required to be carefully selected. For example, the split addition of a catalyst at a constant time interval is preferably recommended.

Accordingly, the conversion rate at the isocyanurate-forming reaction to obtain the polyisocyanate is preferably 10% by mass to 60% by mass, more preferably 15% by mass to 55% by mass, and even more preferably 20% by mass to 50% by mass.

In the case where the conversion rate at the isocyanurate-forming reaction is the upper limit or less, the viscosity of the blocked polyisocyanate composition containing the polyisocyanate can be further decreased. In the case where the conversion rate at the isocyanurate-forming reaction is the lower limit or more, the procedure of terminating the reaction can be further readily conducted.

Monovalent to hexavalent alcohols may be used in addition to the above-mentioned isocyanate monomers so as to obtain the isocyanurate group-containing polyisocyanate.

Examples of the available monovalent to hexavalent alcohols include non-polymerizable alcohols and polymerizable alcohols.

Examples of the non-polymerizable alcohol include monoalcohols and polyhydric alcohols such as diols, triols, and tetraols.

Examples of the monoalcohols include methanol, ethanol, n-propanol, isopropanol, n-butanol, isobutanol, sec-butanol, n-pentanol, n-hexanol, n-octanol, n-nonanol, 2-ethylbutanol, 2,2-dimethylhexanol, 2-ethylhexanol, cyclohexanol, methylcyclohexanol, and ethylcyclohexanol.

Examples of the diols include ethylene glycol, diethylene glycol, triethylene glycol, propylene glycol, dipropylene glycol, tripropylene glycol, 1,2-propanediol, 1,3-propanediol, 1,2-butanediol, 1,3-butanediol, 1,4-butanediol, 2,3-butanediol, 2-methyl-1,2-propanediol, 1,5-pentanediol, 2-methyl-2,3-butanediol, 1,6-hexanediol, 1,2-hexanediol, 2,5-hexanediol, 2-methyl-2,4-pentanediol, 2,3-dimethyl-2,3-butanediol, 2-ethylhexanediol, 1,2-octanediol, 1,2- decanediol, 2,2,4-trimethylpentanediol, 2-butyl-2-ethyl-1,3-propanediol, and 2,2-diethyl-1,3-propanediol.

Examples of the triols include glycerin, and trimethylolpropane.

Examples of the tetraols include pentaerythritol.

Although the polymerizable alcohol is not particularly limited, examples thereof include the above-mentioned polymerizable alcohols.

(5) Preparation method of urethane group-containing polyisocyanate

In the case where a urethane group-containing polyisocyanate is obtained from isocyanate monomers, the urethane group-containing polyisocyanate may be prepared by mixing an excessive amount of isocyanate monomers and an alcohol, and further adding a urethane-forming reaction catalyst thereto, as needed, for example.

Examples of the alcohol include the same alcohols as mentioned in the "Preparation method of isocyanurate group-containing polyisocyanate".

Although the urethane-forming reaction catalyst is not particularly limited, examples thereof include tin-based compounds, zinc-based compounds, and amine-based compounds.

The urethane-forming reaction temperature is preferably 50°C to 160°C, and more preferably 60°C to 120°C.

In the case where the urethane-forming reaction temperature is the upper limit or less, there is a tendency in which the coloring of the polyisocyanate or the like can be further effectively suppressed.

The urethane-forming reaction time is preferably 30 minutes to four hours, more preferably one hour to three hours, and even more preferably one hour to two hours.

The molar ratio of isocyanate groups of isocyanate monomers relative to the molar amount of hydroxyl groups of the alcohol is preferably 2/1 to 50/1. In the case where the molar ratio is the lower limit or more, the viscosity of the polyisocyanate can be further decreased. In the case where the molar ratio is the upper limit or less, the yield of the urethane group-containing polyisocyanate can be further increased.

(6) Preparation method of biuret group-containing polyisocyanate

Although a biuret-forming agent to be used to obtain a biuret group-containing polyisocyanate from isocyanate monomers is not particularly limited, examples thereof include water, monovalent tertiary alcohols, formic acid, organic primary monoamines, and organic primary diamines.

The molar amount of isocyanate group relative to one mol of the biuret-forming agent is preferably 6 mol or more, more preferably 10 mol or more, and even more preferably 10 mol to 80 mol. In the case where the molar amount of isocyanate group relative to one mol of the biuret-forming agent is the lower limit or more, the viscosity of the polyisocyanate is sufficiently decreased. In the case where the molar amount of isocyanate group relative to one mol of the biuret-forming agent is the upper limit or less, the curability when made into a coating composition is further improved.

A solvent may be used to conduct the biuret-forming reaction. The solvent may be any one which allows isocyanate monomers and a biuret-forming agent such as water to be dissolved therein to form a homogeneous phase under reaction conditions.

Specific examples of the solvent include ethylene glycol-based solvents and phosphoric acid-based solvents.

Examples of the ethylene glycol-based solvents include ethylene glycol monomethyl ether acetate, ethylene glycol monoethyl ether acetate, ethylene glycol mono-n-propyl ether acetate, ethylene glycol monoisopropyl ether acetate, ethylene glycol mono-n-butyl ether acetate, ethylene glycol diacetate, ethylene glycol dimethyl ether, ethylene glycol diethyl ether, ethylene glycol di-n-propyl ether, ethylene glycol diisopropyl ether, ethylene glycol di-n-butyl ether, ethylene glycol methylethyl ether, ethylene glycol methylisopropyl ether, ethylene glycol methyl-n-butyl ether, ethylene glycol ethyl-n-propyl ether, ethylene glycol ethylisopropyl ether, ethylene glycol ethyl-n-butyl ether, ethylene glycol n-propyl-n-butyl ether, ethylene glycol isopropyl-n-butyl ether, diethylene glycol monomethyl ether acetate, diethylene glycol monoethyl ether acetate, diethylene glycol mono-n-propyl ether acetate, diethylene glycol monoisopropyl ether acetate, diethylene glycol mono-n-butyl ether acetate, diethylene glycol diacetate, diethylene glycol dimethyl ether, diethylene glycol diethyl ether, diethylene glycol di-n-propyl ether, diethylene glycol diisopropyl ether, diethylene glycol di-n-butyl ether, diethylene glycol methylethyl ether, diethylene glycol methylisopropyl ether, diethylene glycol methyl-n-propyl ether, diethylene glycol methyl-n-butyl ether, diethylene glycol ethylisopropyl ether, diethylene glycol ethyl-n-propyl ether, diethylene glycol ethyl-n-butyl ether, diethylene glycol n-propyl-n-butyl ether, and diethylene glycol isopropyl-n-butyl ether.

Examples of the phosphoric acid-based solvents include trimethyl phosphate, triethyl phosphate, tripropyl phosphate, and tributyl phosphate.

These solvents may be used alone or at least two thereof may be used in combination.

Among these, ethylene glycol monomethyl ether acetate, ethylene glycol monoethyl ether acetate, ethylene glycol diacetate or diethylene glycol dimethyl ether is preferable as the ethylene glycol-based solvent.

Trimethyl phosphate or triethyl phosphate is preferable as the phosphoric acid-based solvent.

The biuret-forming reaction temperature is preferably 70°C to 200°C, and more preferably 90°C to 180°C. In the case where the biuret-forming reaction temperature is the upper limit or less, there is a tendency in which the coloring of the polyisocyanate can be further effectively prevented.

The above-mentioned allophanate-forming reaction, uretdione-forming reaction, iminooxadiazinedione-forming reaction, isocyanurate-forming reaction, urethane-forming reaction and biuret-forming reaction may be conducted sequentially or some of the reactions may be conducted simultaneously.

In the case where the polyisocyanate derived from the isocyanate monomer and a polymerizable alcohol is prepared, the polyisocyanate may be obtained by reacting isocyanate groups of the isocyanate monomers and hydroxyl groups of the polyol, for example.

The molar ratio of isocyanate groups of a diisocyanate to hydroxyl groups of a polyol (NCO/OH) is preferably 3/1 to 30/1, and more preferably 10/1 to 20/1. In the case where the molar ratio, NCO/OH, is the lower limit or more, an excessive increase in the viscosity of the resultant polyisocyanate composition can be effectively suppressed. In contrast, in the case where the molar ratio, NCO/OH, is the upper limit or less, the decrease in the productivity of the resultant polyisocyanate composition can be effectively suppressed.

The reaction temperature is preferably 50°C to 200°C, and more preferably 50°C to 150°C. In the case where the reaction temperature is the lower limit or more, the reaction effectively proceeds. In contrast, in the case where the reaction temperature is the upper limit or less, an unfavorable side reaction such as coloring of the resultant polyisocyanate composition can be effectively suppressed. The reaction time is preferably 0.5 hours to 5 hours.

At least one reaction selected from the group consisting of the above-mentioned allophanate-forming reaction, uretdione-forming reaction, iminooxadiazinedione-forming reaction, isocyanurate-forming reaction, urethane-forming reaction and biuret-forming reaction may be conducted after or when isocyanate groups of a diisocyanate and hydroxyl groups of a polyol are reacted. Among these, the isocyanurate-forming reaction is preferably conducted. The isocyanurate-forming reaction makes it possible to further improve the hardness when made into a coating film.

Unreacted isocyanate monomers are removed from the reaction liquid after the reactions terminate, by thin-film distillation, extraction or the like, to obtain the polyisocyanate.

In addition, an antioxidant or an ultraviolet absorber may be added to the obtained polyisocyanate, so as to suppress coloring when being stored, for example.

Examples of the antioxidant include hindered phenols such as 2,6-di-tert-butyl-p-cresol. Examples of the ultraviolet absorber include benzotriazole and benzophenone. One of these antioxidants and ultraviolet absorbers may be used alone, or at least two thereof may be used in combination. The addition amount thereof is preferably 10 ppm by mass to 500 ppm by mass relative to the mass of the polyisocyanate.

(Physical property of polyisocyanate)

The amount of isocyanate groups of the polyisocyanate is preferably 5% by mass to 25% by mass, more preferably 5% by mass to 23% by mass, even more preferably 6% by mass to 20% by mass, and most preferably 8% by mass to 17% by mass.

The amount of isocyanate groups can be measured by the method described in the the examples below.

The number-average molecular weight of the polyisocyanate is preferably 500 to 10,000, more preferably 1,000 to 5,000, even more preferably 1,200 to 4,800, and most preferably 1,500 to 4,600. In the case where the number-average molecular weight is the lower limit or more, the decrease in the flexibility of a coating film can be further effectively suppressed. In contrast, in the case where the number-average molecular weight is the upper limit or less, the decrease in the smoothness of a coating film can be further effectively suppressed.

The number-average molecular weight of the polyisocyanate can be measured by the method mentioned in the examples below.

The weight-average molecular weight of the polyisocyanate is preferably 500 to 100,000, more preferably 4,000 to 50,000, even more preferably 4,500 to 49,000, and most preferably 5,000 to 48,500.

The weight-average molecular weight of the polyisocyanate can be measured by the method mentioned in the examples below.

[Blocking agent]

The blocked polyisocyanate is a blocked polyisocyanate derived from a polyisocyanate and a blocking agent, and the blocking agent contains a compound having a heterocyclic ring containing at least three nitrogen atoms.

In the above-mentioned blocked polyisocyanate, the amount of the compound having a heterocyclic ring containing at least three nitrogen atoms relative to the total mass of the blocking agent is preferably 50% by mass or more, more preferably 60% by mass or more, even more preferably 70% by mass or more, particularly preferably 90% by mass or more, and most preferably 100% by mass. Namely, it is most preferable that the blocking agent consist of a compound having a heterocyclic ring containing at least three nitrogen atoms.

Examples of the compound having a heterocyclic ring containing at least three nitrogen atoms include the following compounds:

triazole-based blocking agents such as 1,2,4-triazole, 1,2,3-triazole, and 3,5-dimethyl-1,2,4-triazole; and tetrazole-based blocking agents such as 1H-1,2,3,4-tetrazole

The blocked polyisocyanate composition of the present invention includes at least one organic acid salt.

The organic acid salt is a carboxylate salt.

<Carboxylate salt>

The carboxylate salt is a metal carboxylate salt from the viewpoint of the curability at a low temperature.

Examples of the metal of the metal carboxylate salt include sodium, potassium, lithium, cesium, nickel, cobalt, cadmium, barium, calcium, zinc, manganese, copper, cerium, zirconium, iron, lead, germanium, antimony, aluminum, titanium, and bismuth. Among these, the metal is preferably a monovalent metal from the viewpoint of storage stability of the resultant one-component coating composition, and more preferably a Group 1 element such as sodium, potassium, lithium, or cesium from the viewpoint of the curability at a low temperature.

In addition, trivalent metals such as bismuth and iron are preferable from the viewpoint of the coating film property.

The carboxylic acid of the metal carboxylate salt may be a monocarboxylic acid or a dicarboxylic acid, and examples thereof include aliphatic saturated acids, unsaturated acids, and aromatic acids, such as formic acid, acetic acid, acrylic acid, methacrylic acid, propionic acid, butyric acid, hexanoic acid, octylic acid, octanoic acid, capric acid, stearic acid, oleic acid, eicosanoic acid, myristic acid, and benzoic acid. Among these, the carbon number of the carboxylic acid of the metal carboxylate salt is preferably 1 to 12 from the viewpoint of compatibility, and C1-12 aliphatic acids are more preferable from the viewpoint of the anti-yellowing properties of the resultant coating film.

Specific examples of the preferable metal carboxylate salt include sodium propionate, potassium acetate, potassium propionate, potassium 2-ethylhexanoate, cesium acetate, lithium acetate, and bismuth 2-ethylhexanoate.

The amount of the counter cation of the carboxylate salt, relative to the total mass of the blocked polyisocyanate, is 0.1% by mass to 20% by mass, preferably 0.3% by mass to 15% by mass, even more preferably 0.5% by mass to 10% by mass, and particularly preferably 0.5% by mass to 6% by mass.

In the case where the amount of the counter cation is the upper limit or less, the storage stability of the resultant one-component coating composition or the solvent resistance becomes further favorable. In the case where the amount of the counter cation is the lower limit or more, the curability at a low temperature becomes further favorable.

<Preparation method of the blocked polyisocyanate composition>

The blocked polyisocyanate may be obtained by reacting the polyisocyanate and the blocking agent.

The reaction in which the polyisocyanate is blocked with the blocking agent is allowed to proceed regardless in the presence or absence of a solvent, and thus a blocked polyisocyanate is obtained.

The mixture ratio of the polyisocyanate and the blocking agent is set from the viewpoint of the storage stability of the resultant one-component coating composition such that the molar ratio of active hydrogen groups contained in the blocking agent relative to one isocyanate group contained in the polyisocyanate is preferably 0.5 to 3.0, more preferably 0.8 to 2.0, and even more preferably 1 to 1.5.

In the reaction step, the reaction temperature and the reaction time are appropriately determined depending on the procedure of the reaction. The reaction temperature is preferably 0°C to 150°C, and the reaction time is preferably 0.5 hours to 24 hours.

In the case where at least two blocking agents are used to conduct the blocking reaction, the blocking agents may be simultaneously used to conduct the blocking reaction, or one of the blocking agents may be used to conduct the blocking reaction, followed by blocking remaining free isocyanate groups with other blocking agents.

In the reaction, a conventionally-known usual catalyst may be used, as needed. Although the catalyst is not particularly limited, examples thereof include the following compounds (1) to (6). One of the following catalysts may be used alone or a mixture thereof may be used.

(1) Organic tin compounds such as tin octanoate, tin 2-ethyl-1-hexanoate, tin ethylcaproate, tin laurate, tin palmitate, dibutyltin oxide, dibutyltin dichloride, dibutyltin diacetate, dibutyltin dimalate, dibutyltin dilaurate, dioctyltin diacetate, and dioctyltin dilaurate.

(2) Zinc chloride, and organic zinc compounds such as zinc octanoate, zinc 2-ethyl-1-hexanoate, zinc 2-ethylcaproate, zinc stearate, zinc naphthenate, and zinc acetylacetonate.

(3) Organic titanium compounds.

(4) Organic zirconium compounds.

(5) Tertiary amines such as triethylamine, tributylamine, N,N-diisopropylethylamine, and N,N-dimethylethanolamine.

(6) Diamines such as triethylenediamine, tetramethylethylenediamine, and 1,4-diazabicyclo[2.2.2]octane.

The end of the reaction may be confirmed by confirming the disappearance or decrease of isocyanate groups by an infrared spectroscopic analysis, for example.

In the case where a solvent is used, a solvent which is inactive against isocyanate groups may be used.

In the case where a solvent is used, the amount of the solid content derived from the polyisocyanate and the blocking agent, relative to 100 parts by mass of the blocked polyisocyanate composition, is usually 10 parts by mass to 95 parts by mass, preferably 20 parts by mass to 80 parts by mass, and more preferably 30 parts by mass to 70 parts by mass.

The blocking reaction of either the polyisocyanate or the denatured polyisocyanate with the blocking agent may be conducted in the presence or absence of a solvent, and thus a blocked polyisocyanate is obtained.

The blocking reaction may be conducted as mentioned in the preparation method in which the blocked polyisocyanate is a blocked polyisocyanate derived from a polyisocyanate and a blocking agent.

In the case where water or a solvent is used, a solvent which is inactive against isocyanate groups may be used.

In the case where a solvent is used, the amount of the solid content derived from the polyisocyanate and the blocking agent relative to 100 parts by mass of the blocked polyisocyanate composition is usually 10 parts by mass to 95 parts by mass, preferably 20 parts by mass to 80 parts by mass, and even more preferably 30 parts by mass to 70 parts by mass.

In the case where water is used, it is preferable that the predetermined amount thereof be added dividedly or added dropwise. In the case of the divided addition, the predetermined amount of water is preferably divided into quarters to eighths. The liquid temperature is preferably maintained within a range of 50°C or higher in the case where the concentration of the blocked polyisocyanate relative to water is 55% by mass or more, within a range of 45°C or higher and less than 50°C in the case where the concentration of the blocked polyisocyanate relative to water is 45% by mass or more and less than 55% by mass, and within a range of less than 50°C in the case where the concentration of the blocked polyisocyanate relative to water is less than 45% by mass.

In the case where water is added at once, or the liquid temperature becomes 80°C or more or less than 20°C, the average particle size (average dispersed particle size) of aqueous dispersion of the blocked polyisocyanate may be increased, thereby causing precipitation or separation, or deteriorating the stability of the aqueous dispersion. The concentration of the blocked polyisocyanate in the thus obtained aqueous dispersion composition is preferably 10% by mass to 40% by mass.

In the above-mentioned preparation methods of the blocked polyisocyanate composition, although the carboxylate salt may be added before or after the blocking reaction, the carboxylate salt is preferably added after decreasing the temperature to 100°C or less after the blocking reaction so as to prevent denaturation of carboxylate salts. The carboxylate salt is preferably added such that the amount of the counter cation of the carboxylate salt becomes within the above-mentioned range.

The blocked polyisocyanate composition of the above-mentioned embodiment may further contain at least one selected from the group consisting of antioxidants, light stabilizers, polymerization inhibitors, and surfactants, and preferably contains a surfactant.

Examples of the antioxidants and the light stabilizers include: aliphatic, aromatic or alkyl-substituted aromatic esters of phosphoric acid or phosphorus acid, hypophosphorous acid derivatives; phosphorous compounds, such as phenylphosphonic acid, phenylphosphinic acid, diphenylphosphonic acid, polyphosphonate, dialkylpentaerythritol diphosphate, and dialkylbisphenol A diphosphate; phenol-based derivatives (particularly, hindered phenol compounds); sulfur-containing compounds such as thioether-based compounds, dithionate-based compounds, mercaptobenzimidazole-based compounds, thiocarbanilide-based compounds, and thiodipropionate esters; and tin-based compounds such as tin malate and dibutyltin monoxide. One of these may be contained alone or at least two thereof may be contained.

Examples of the polymerization inhibitors include hydroquinones, phenols, cresols, catechols, and benzoquinones. Specific examples of the polymerization inhibitors include benzoquinone, p-benzoquinone, p-toluquinone, p-xyloquinone, naphthoquinone, 2,6-dichloroquinone, hydroquinone, trimethylhydroquinone, catechol, p-t-butylcatechol, 2,5-di-t-butylhydroquinone, monomethylhydroquinone, p-methoxyphenol, 2,6-di-t-butyl-p-cresol, and hydroquinone monomethyl ether. One of these compounds may be contained alone, or at least two thereof may be contained.

Examples of the surfactants include conventionally-known anionic surfactants, cationic surfactants, and ampholytic surfactants.

<<One-component coating composition>>

A one-component coating composition of the present invention includes: the blocked polyisocyanate composition and a polyvalent active hydrogen compound.

The above-mentioned constitution of the one-component coating composition of the above-mentioned embodiment makes it possible to obtain a coating film having favorable curability at a low temperature.

Each constituent component contained in the one-component coating composition of the will be explained specifically below.

<Polyvalent active hydrogen compound>

Although the polyvalent active hydrogen compound is not particularly limited, examples thereof include polyols, polyamines, and alkanolamines. One of these polyvalent active hydrogen compounds may be contained alone, or at least two thereof may be contained in combination. Among these, the polyvalent active hydrogen compound is preferably a polyol.

[Polyol]

Examples the polyol include polyester polyol, polyether polyol, acrylic polyol, polyolefin polyol, fluorinated polyol, polycarbonate polyol, and polyurethane polyol. One of these polyols may be contained alone, or at least two thereof may be contained in combination.

Among these, the polyol is preferably a polyester polyol or an acrylic polyol.

(Polyester polyol)

The polyester polyol may be obtained, for example, by condensation reaction of either one dibasic acid or a mixture of at least two dibasic acids with either one polyhydric alcohol or a mixture of at least two polyhydric alcohols.

Examples of the dibasic acid include carboxylic acids such as succinic acid, adipic acid, dimer acid, maleic anhydride, phthalic anhydride, isophthalic acid, terephthalic acid, and 1,4-cyclohexanedicarboxylic acid.

Examples of the polyhydric alcohol include ethylene glycol, propylene glycol, diethylene glycol, 1,4-butanediol, neopentyl glycol, 1,6-hexanediol, trimethylpentanediol, cyclohexanediol, trimethylolpropane, glycerin, pentaerythritol, 2-methylolpropanediol, and ethoxylated trimethylolpropane.

Alternatively, polycaprolactones obtained by, for example, subjecting lactones such as ε-caprolactone to ring-opening polymerization using polyhydric alcohol may also be used as the polyester polyols.

(Polyether polyol)

Although the polyether polyols are not particularly limited, examples thereof include the following compounds (1) to (3).

(1) Polyether polyols obtained by random or block addition of one alkylene oxide or a mixture of alkylene oxides to one polyvalent hydroxyl compound or a mixture of polyvalent hydroxyl compounds using a catalyst.

Examples of the catalyst include hydroxides (such as hydroxides of lithium, sodium, or potassium), strong basic catalysts (such as alcoholates and alkylamines), and composite metal cyanide complexes (such as metal porphyrin, and zinc hexacyanocobaltate complex).

Examples of the alkylene oxide include ethylene oxide, propylene oxide, butylene oxide, cyclohexene oxide, and styrene oxide.

(2) Polyether polyols obtained by reacting an alkylene oxide with a polyamine compound.

Examples of the polyamine compound include ethylenediamine.

Examples of the alkylene oxide include the compounds mentioned in (1).

(3) Polymer polyols obtained by polymerizing acrylamide using as a medium the polyether polyol (1) or (2).

Examples of the polyvalent hydroxyl compound include the following compounds (i) to (vi).

(i) Diglycerin, ditrimethylolpropane, pentaerythritol, and dipentaerythritol.

(ii) Sugar alcohol-based compounds such as erythritol, D-threitol, L-arabinitol, ribitol, xylitol, sorbitol, mannitol, galactitol, and rhamnitol.

(iii) Monosaccharides such as arabinose, ribose, xylose, glucose, mannose, galactose, fructose, sorbose, rhamnose, fucose, and ribodesose;

(iv) Disaccharides such as trehalose, sucrose, maltose, cellobiose, gentiobiose, lactose, and melibiose;

(v) Trisaccharides such as raffinose, gentianose, and melicitose.

(vi) Tetrasaccharides such as stachyose.

(Acrylic polyol)

Although the acrylic polyol is not particularly limited, examples thereof include ones obtained, for example, by copolymerizing either one ethylenically unsaturated bond-containing monomer having a hydroxyl group or a mixture of ethylenically unsaturated bond-containing monomers having a hydroxyl group with either another ethylenically unsaturated bond-containing monomer copolymerizable therewith or a mixture of other ethylenically unsaturated bond-containing monomers copolymerizable therewith.

Although the ethylenically unsaturated bond-containing monomer having a hydroxyl group is not particularly limited, examples thereof include hydroxyethyl acrylate, hydroxypropyl acrylate, hydroxybutyl acrylate, hydroxyethyl methacrylate, hydroxypropyl methacrylate, and hydroxybutyl methacrylate. One of these may be used or at least two thereof may be used in combination. Among these, hydroxyethyl acrylate or hydroxyethyl methacrylate is preferable.

Examples of the other ethylenically unsaturated bond-containing monomers copolymerizable with the monomer include the following compounds (1) to (6). One of these may be used alone or at least two thereof may be used in combination.

(1) Acrylic esters such as methyl acrylate, ethyl acrylate, propyl acrylate, isopropyl acrylate, n-butyl acrylate, isobutyl acrylate, n-hexyl acrylate, cyclohexyl acrylate, 2-ethylhexyl acrylate, lauryl acrylate, benzyl acrylate, and phenyl acrylate.

(2) Methacrylic esters such as methyl methacrylate, ethyl methacrylate, propyl methacrylate, isopropyl methacrylate, n-butyl methacrylate, isobutyl methacrylate, n-hexyl methacrylate, cyclohexyl methacrylate, 2-ethylhexyl methacrylate, lauryl methacrylate, benzyl methacrylate, and phenyl methacrylate.

(3) Unsaturated carboxylic acids such as acrylic acid, methacrylic acid, maleic acid, and itaconic acid.

(4) Unsaturated amides such as acrylamide, methacrylamide, N,N-methylene bisacrylamide, diacetone acrylamide, diacetone methacrylamide, maleic acid amide, and maleimide.

(5) Vinyl-based monomers such as glycidyl methacrylate, styrene, vinyl toluene, vinyl acetate, acrylonitrile, and dibutyl fumarate.

(6) Vinyl-based monomers having a hydrolyzable silyl group such as vinyltrimethoxysilane, vinylmethyldimethoxysilane, and γ-(meth)acryloxypropyltrimethoxysilane.

(Polyolefin polyol)

Although the polyolefin polyol is not particularly limited, examples thereof include polybutadiene having at least two hydroxyl groups, hydrogenated polybutadiene, polyisoprene, and hydrogenated polyisoprene.

The statistic number of hydroxyl groups of a single molecule of a polyol (hereinafter, abbreviated as "average hydroxyl group number") is preferably at least two. In the case where the average hydroxyl group number of a polyol is two or more, there is a tendency in which the decrease in the cross-link density of the resultant coating film is further suppressed.

(Fluorinated polyol)

In the present specification, the term "fluorinated polyol" refers to a polyol containing fluorine in a molecule thereof. Specific examples of the fluorinated polyol include copolymers disclosed in Japanese Unexamined Patent Application, First Publication No. Sho 57-34107 (Reference Document 1), or Japanese Unexamined Patent Application, First Publication No. Sho 61-275311 (Reference Document 2), such as fluoroolefins, cyclic vinyl ethers, hydroxyalkylvinyl ethers, and vinyl monocarboxylates.

(Polycarbonate polyol)

Although the polycarbonate polyol is not particularly limited, examples thereof include the following compounds (1) to (4):

(1) dialkyl carbonates such as dimethyl carbonate;
(2) alkylene carbonates such as ethylene carbonate;
(3) diaryl carbonates such as diphenyl carbonate; and
(4) ones obtained by condensation polymerization of the above-mentioned low-molecular-weight carbonates (1) to (3).

(Polyurethane polyol)

Although the polyurethane polyol is not particularly limited, the polyurethane polyol may be obtained by, for example, conventionally reacting a polyol which does not have any carboxy groups with an isocyanate component.

Examples of the polyol which does not have any carboxy groups include: low-molecular-weight ones such as ethylene glycol and propylene glycol; and high-molecular-weight ones such as acrylic polyol, polyester polyol, and polyether polyol.

[Hydroxyl value of polyol]

Although there are no particular limitations on the hydroxyl value of the above-mentioned polyol per resin, the hydroxyl value is preferably 10 mgKOH/g resin g to 300 mgKOH/g resin.

In the case where the hydroxyl value per resin is the lower limit or more, there is a tendency in which the decrease in the cross-link density is suppressed and intended physical properties can be sufficiently achieved. In the case where the hydroxyl value per resin is the upper limit or less, there is a tendency in which an excessive increase in the cross-link density is suppressed, and the mechanical physical property of a coating film obtained by curing the one-component coating composition of the present embodiment can be further improved.

The hydroxyl value of polyol may be measured in accordance with JIS K1557.

[Polyamine]

Although the polyamine is not particularly limited, the polyamine preferably has at least two primary amino groups or secondary amino groups in one molecule thereof, and more preferably has at least three primary amino groups or secondary amino groups in one molecule thereof.

Specific examples of the polyamine include the following compounds (1) to (3):

(1) diamines, such as ethylenediamine, propylenediamine, butylenediamine, triethylenediamine, hexamethylenediamine, 4,4'-diaminodicyclohexylmethane, piperazine, 2-methylpiperazine, and isophorone diamine;
(2) chained polyamines having at least three amino groups, such as bishexamethylene triamine, diethylenetriamine, triethylenetetramine, tetraethylenepentamine, pentamethylenehexamine, and tetrapropylenepentamine; and
(3) cyclic polyamines such as 1,4,7,10,13,16-hexaazacyclooctadecane, 1,4,7,10-tetraazacyclodecane, 1,4,8,12-tetraazacyclopentadecane, and 1,4,8,11-tetraazacyclotetradecane.

[Alkanolamine]

In the present specification, the term "alkanolamine" refers to a compound having both an amino group and a hydroxyl group in one molecule thereof.

Specific examples of the alkanolamine include monoethanolamine, diethanolamine, aminoethylethanolamine, N-(2-hydroxypropyl)ethylenediamine, mono-, di-(n- or iso-)propanolamine, ethylene glycol bis-propylamine, neopentanolamine, and methylethanolamine

<Urethane-forming catalyst>

It is preferable that the one-component coating composition of the embodiment further contain a urethane-forming catalyst.

The urethane-forming catalyst may be a compound which is different from the above-mentioned carboxylate salt, and may be a basic compound, or a Lewis acid compound.

Examples of the basic compound include metal hydroxides, metal alkoxides, metal acetylacetinates, hydroxides of onium salts, halides of onium salts, metallic salts of active methylene compounds, onium salts of active methylene compounds, aminosilanes, amines, and phosphines. Preferable examples of the onium salts include ammonium salts, phosphonium salts and sulfonium salts.

Examples of the Lewis acid compound include organic tin compounds, organic zinc compounds, organic titanium compounds, and organic zirconium compounds.

Among these, the urethane-forming catalyst is preferably an organic tin compound, and more preferably dioctyltin (DOT) or dibutylti dilaurate (DBTDL), from the viewpoint of the curability at a low temperature.

In the case where the urethane-forming catalyst is an organic tin compound, although the amount of the urethane-forming catalyst is not particularly limited, the tin (Sn) equivalent amount in the organic tin compound relative to 100 parts by mass of the polyvalent active hydrogen compound may be 0.01 parts by mass to 0.5 parts by mass, 0.03 parts by mass to 0.45 parts by mass, or 0.05 parts by mass to 0.40 parts by mass.

In the case where a blocked polyisocyanate derived from a polyisocyanate and a triazole-based blocking agent, a metal carboxylate salt in which the metal is a trivalent metal, and a urethane-forming catalyst are present in the one-component coating composition, the blocked isocyanate is dissociated at a low temperature, and the urethane cross-linkage is formed securely, thereby realizing both high hardness and high solvent resistance of a coating film having a curability at a low temperature, and thus this case is preferable.

<Other resin components>

The one-component coating composition of the embodiment may further contain other resin components such as a conventional melamine resin, epoxy resin, or polyurethane resin, as needed.

<Other additives>

In the case where the one-component coating composition of the embodiment contains a polyol having a carboxy group, the one-component coating composition may further contain, as a curing agent component, another curing agent such as an oxazoline group-containing compound or a carbodiimide group-containing compound. One of these compounds may be contained alone, or at least two thereof may be contained in combination.

In the case where the one-component coating composition contains a polyol having a carbonyl group, the one-component coating composition may further contain, as the curing agent component, another curing agent such as a hydrazide group-containing compound or a semicarbazide group-containing compound. One of these compounds may be contained alone, or at least two thereof may be contained in combination.

The one-component coating composition of the embodiment may further contain other curing agents, or other additives such as antioxidants, ultraviolet absorbers (light stabilizers), pigments, metal powdered pigments, rheology-controlling agents, or curing-promoting agents, as needed.

Examples of the other curing agents include melamine resins, urea resins, epoxy group-containing compounds or resins, carboxy group-containing compounds or resins, acid anhydrides, alkoxysilane group-containing compounds or resins, and hydrazide compounds.

Examples of the antioxidants and the ultraviolet absorbers include the same compounds as those mentioned for the "blocked polyisocyanate composition".

Examples of the pigments include titanium oxide, carbon black, indigo, quinacridone, and pearl mica.

Examples of the metal powdered pigments include aluminum.

Examples of the rheology-controlling agents include hydroxyethyl cellulose, urea compounds, and microgels.

Examples of the curing-promoting agents include organic metal compounds other than the above-mentioned urethane-forming catalysts. Examples of metal include tin, zinc, and lead.

<Preparation method of the one-component coating composition>

The one-component coating composition of the embodiment is obtained by mixing either the blocked polyisocyanate composition, or, the blocked polyisocyanate, the carboxylate salt, and the polyvalent active hydrogen compound, with, as needed, a urethane-forming catalyst, another resin component and another additive, using a conventionally-known method.

In the case of a water-based one-component coating composition, for example, a carboxylate salt, and further, as needed, an additive, such as a urethane-forming catalyst, a curing agent that can react with a cross-linking functional group in the polyvalent active hydrogen compound, a carboxylate salt, a curing catalyst, a solvent, a pigment (such as extender pigment, coloration pigment, or metallic pigment), an ultraviolet absorber, a light stabilizer, a radical stabilizer, a yellowing-inhibitor that suppresses coloration at a baking step, a paint-surface-adjusting agent, a flow-adjusting agent, a pigment-dispersing agent, a defoaming agent, a thickening agent, or a film forming aid, is added to the polyvalent active hydrogen compound, an aqueous dispersion thereof, or an aqueous solution thereof, when no carboxylate salt is contained in the blocked polyisocyanate composition. Then, the blocked polyisocyanate composition, the blocked polyisocyanate, or an aqueous dispersion thereof is added to the resultant as a curing agent, followed by further adding water or a solvent thereto, as needed, to adjust the viscosity of the resultant. Then, the resultant is forcibly stirred using a stirrer to obtain a water-based one-component coating composition.

In the case where a solvent-based one-component coating composition is prepared, a carboxylate salt, and further, as needed, an additive, such as a urethane-forming catalyst, a curing agent that can react with a cross-linking functional group in the polyvalent hydroxyl compound, a carboxylate salt, a curing catalyst, a solvent, a pigment (such as extender pigment, coloration pigment, or metallic pigment), an ultraviolet absorber, a light stabilizer, a radical stabilizer, a yellowing-inhibitor that suppresses coloration at a baking step, a paint-surface-adjusting agent, a flow-adjusting agent, a pigment-dispersing agent, a defoaming agent, a thickening agent, or a film-forming aid is added to the polyvalent active hydrogen compound, or a solvent dilution thereof, when no carboxylate salt is contained in the blocked polyisocyanate composition. Then, the blocked polyisocyanate composition or the polyisocyanate is added to the resultant as a curing agent, followed by further adding a solvent thereto, as needed, to adjust the viscosity of the resultant. Then, the resultant is stirred by hand or using a stirrer such as mazelar to obtain a solvent-based coating composition.

<Usage>

The one-component coating composition of the present embodiment may be preferably used as a primer, intermediate, or upper coating material to be applied on metal such as a steel plate or surface-treated steel plate, plastic, ceramic of inorganic material or the like, glass, or concrete, by roll coating, curtain flow coating, spray coating, electrostatic coating, bell coating, immersion, roller coating, brush coating or the like.

The one-component coating composition of the present embodiment is preferably used to impart an aesthetically pleasing appearance, weather resistance, acid resistance, rust resistance, chipping resistance, adhesiveness, or the like, to a precoat metal such as an anti-rust steel plate, a vehicle coated part, a plastic-coated part, or the like.

Moreover, the one-component coating composition of the present embodiment is also useful as an adhesive, tackifier, elastomer, foam, surface-treating agent, or the like.

<<Coating film>>

A coating film of the present embodiment is formed by curing the one-component coating composition of the above-mentioned embodiment. The coating film of the present embodiment has excellent curability at a low temperature. In the case where the one-component coating composition of the above-mentioned embodiment contains a hydrophilic blocked polyisocyanate, the external appearance of the coating film is excellent.

The coating film of the present embodiment is formed by coating the one-component coating composition of the above-mentioned embodiment using a conventionally-known method such as roll coating, curtain flow coating, spray coating, bell coating, electrostatic coating, or the like, followed by drying at ordinary temperature or conducting a baking step to cure the one-component coating composition.

The coating film formed by curing the one-component coating composition has a urethane bond formed by an isocyanate group derived from a polyisocyanate before blocking reaction and a hydroxyl group derived from a polyol. Therefore, the coating film of the present embodiment, which is formed from the one-component coating composition, tends to have excellent chemical resistance, heat resistance, and water resistance, which are characteristics of a general urethane cross-linked coating film.

<<Coated article>>

A coated article of the present embodiment includes the coating film of the above-mentioned embodiment. Since the coated article of the present embodiment includes the coating film of the above-mentioned embodiment, the curability at a low temperature is excellent. In the case where a hydrophilic blocked polyisocyanate is used as a curing agent component, the external appearance of the coating film is excellent.

The coated article of the present embodiment has the coating film having excellent chemical resistance, heat resistance, and water resistance, and an aesthetically pleasing appearance, acid resistance, rust resistance, chipping resistance, adhesiveness, or the like is further impaired thereto.

EXAMPLES

Hereinafter, the present embodiment will be described further specifically with reference to specific examples, but the present embodiment is not limited to the following examples.

The measurement method of each physical property and the evaluation method will be described below. The terms "part" and "%" indicate "part by mass" and "% by mass" respectively, unless particularly mentioned.

<Measurement method and evaluation method >

[Physical property 1]

(Isocyanate group (NCO) content of polyisocyanate)

1 g to 3 g of a polyisocyanate was accurately weighed (W g) in a conical flask, and then 20 ml of toluene was added thereto to dissolve the polyisocyanate therein. Then, 10 mL of a toluene solution of 2N di-n-butylamine was added thereto, and then mixed, followed by leaving the mixture at room temperature for 15 minutes. Then, 70 mL of isopropyl alcohol was added thereto, and then mixed. Then, the resultant liquid was subjected to titration with a 1N hydrochloric acid solution (Factor F) using an indicator to obtain a titration value V2 mL. Then, a titration value V1 mL was obtained by titration conducted in a similar manner to that described above except that no polyisocyanate was used. Then, the isocyanate group (NCO) content of polyisocyanate was calculated in accordance with the following equation.

$$\text{NCO content (\% by mass)} = (V1 - V2) \times F \times 42 / (W \times 1000) \times 100$$

[Physical property 2]

(Number-average molecular weight, weight-average molecular weight and molecular weight distribution of polyisocyanate)

The number-average molecular weight Mn and the weight-average molecular weight Mw were determined by gel permeation chromatography (GPC) with reference to polystyrene standards using the following device under the following conditions. The molecular weight distribution Mw/Mn was determined by dividing the weight-average molecular weight by the number-average molecular weight.

(Measurement conditions)

| | |
|---|---|
| Device: | HLC-802A (manufactured by Tosoh Corporation) |
| Column: | G1000HXL × 1 column (manufactured by Tosoh Corporation) |
| | G2000HXL × 1 column (manufactured by Tosoh Corporation) |
| | G3000HXL × 1 column (manufactured by Tosoh Corporation) |
| Carrier: | Tetrahydrofuran |
| Flow rate: | 0.6 mL/minute |
| Sample concentration: | 1.0% by mass |
| Injection amount: | 20 μL |
| Temperature: | 40°C |
| Detection method: | Differential refractometer |

[Physical property 3]

(Average number of isocyanate functional groups of polyisocyanate)

The average number of isocyanate functional groups was determined using polyisocyanate as a sample by the following equation. In the equation, Mn indicates the number-average molecular weight of polyisocyanate, and NCO% is the isocyanate group (NCO) content.

$$\text{Average isocyanate number} = \text{Mn} \times \text{NCO\%} \times 0.01 / 42$$

[Physical property 4]

(HDI/IPDI)

The mass ratio (HDI/IPDI) of the structural unit derived from HDI to the structural unit derived from IPDI in the polyisocyanate composition was calculated by the following method. First, the unreacted HDI mass and the unreacted IPDI mass were calculated from the unreacted diisocyanate mass after reaction and the concentrations of HDI and IPDI in the unreacted diisocyanate, which were obtained by gas chromatography analysis. The calculated unreacted HDI mass and the calculated unreacted IPDI mass were subtracted from the charged HDI mass and the charged IPDI mass, respectively, to obtain differences as the mass of the structural unit derived from HDI and the mass of the structural unit derived from IPDI, respectively. Then, the mass of the structural unit derived from HDI was divided by the mass of the structural unit derived from IPDI to obtain the ratio HDI/IPDI.

[Physical property 5]

(Solid content of blocked polyisocyanate composition)

The solid content of the blocked polyisocyanate composition was determined as described below.

The weight of an aluminum plate having a bottom diameter of 38 mm was measured. Then, approximately 1 g of a blocked polyisocyanate composition prepared in an example or comparative example was placed on the aluminum plate, and the weight thereof (W1) was measured. Then, the thickness of the blocked polyisocyanate composition was adjusted to be uniform. Then, the blocked polyisocyanate composition placed on the aluminum plate was maintained at 105°C in an oven for one hour. Then, when the temperature of the aluminum plate decreased to room temperature, the weight (W2) of the blocked polyisocyanate composition remaining on the aluminum plate was measured. Then, the solid content in the blocked polyisocyanate composition was calculated in accordance with the following equation.

$$\text{Solid content (\% by mass) of blocked polyisocyanate composition} = W2/W1 \times 100$$

[Physical property 6]

(Effective isocyanate group (NCO) content in blocked polyisocyanate composition)

The effective isocyanate group (NCO) content of the blocked polyisocyanate composition was determined as mentioned below.

The term "effective isocyanate group (NCO) content" used herein refers to the amount of blocked isocyanate groups that can participate in the cross-linking reaction and that are present in the blocked polyisocyanate composition after blocking reaction, and is indicated by % by mass of isocyanate groups.

The effective NCO content was calculated by the following equation. In the following equation, the values calculated in the physical property 1 and the physical property 2, respectively, were used as "NCO%" and "solid content of blocked polyisocyanate composition". In the case where a sample was diluted with a solvent or the like, the value was calculated in the diluted state.

Effective NCO content (% by mass) = [(Solid content (% by mass) of blocked polyisocyanate composition) $\times$ {(mass of polyisocyanate used in blocking reaction) $\times$ NCO%}] / (mass of blocked polyisocyanate composition after blocking reaction)

[Physical property 7]

(Amounts of A and X in blocked polyisocyanate composition)

The amount of an organic acid or an inorganic acid (A) contained in the blocked polyisocyanate composition and the amount of a metal or a quaternary ammonium cation (X) were determined by the following method 1 or 2.

For example, method 1 was used to analyze quaternary ammonium cations or organic acids or inorganic acids of metal salts that are susceptible to ionization, such as potassium acetate, and method 2 was used to analyze organic acids having a high carbon number, such as bismuth 2-ethylhexanoate.

(Method 1)

Ultrapure water was added to a sample, and then mixed, followed by leaving the mixture still for several hours. Then, an aqueous layer was filtered, and then measured by ion chromatography to obtain the amounts of anions and cations of the organic salts and inorganic salts. The measurement conditions are mentioned below.

(Measurement Conditions)

| | |
|---|---|
| Device: | Ion chromatograph manufactured by Shimadzu Corporation |
| Column: | Shim-pack-IC-C4 |
| | 4.6 mm I.D. $\times$ 150 mm L, 7 $\mu$m (manufactured by Shimadzu Corporation) |
| Mobile phase: | A) 3.5 mmol/L oxalic acid |
| | B) 1 mmol/L 18-crown-6 |
| Flow rate: | 1.0 mL/min |
| Sample concentration: | 1.0% by mass |
| Injection amount: | 50 $\mu$L |
| Temperature: | 45°C |
| Detection: | CDD |

(Method 2)

A sample was diluted with ethyl acetate, and then subjected to gas chromatography mass analysis to obtain the amount of organic acid. The measurement conditions are mentioned below.

(Measurement Conditions)

| | |
|---|---|
| Device: | Thermo Electron Voyager |
| Column: | DB-5 0.25 mm, I.D $\times$ 30 m, film thickness: 1.0 $\mu$m |
| Temperature: | Column: 100°C - 5°C/min $\rightarrow$ 250°C -20°C/min $\rightarrow$ 320°C (10 min) |
| Inlet: | 320°C |
| Injection amount: | 0.1 $\mu$L |
| Split ratio: | 1/15 |
| Detection: | GC/MS: EI method (Electron Impact Ionization method) |

In the case where X is a heavy metal, the amount was determined by ICP emission spectrochemical analysis.
About 0.2 g of a sample was put in a quart insert container, 6 ml of 68% nitric acid was added thereto, and then placed in a Teflon (trademark) decomposition container in which a temperature-controlling solvent was put, followed by conducting thermal decomposition by microwave at 210°C for 45 minutes (hold: 15 minutes), and then adjusting the total amount to approximately 100 g using ultrapure water. The resultant test liquid was subjected to measurement to obtain the amount of metal.

(Mass ratio (X/(n)A) of X to A)

The mass ratio (X/(n)A) of X to A was calculated using the amounts obtained by the above-mentioned measurement method.

[Evaluation 1] Curability at a low temperature

Each one-component coating composition prepared in example or comparative example was coated on a polypropylene (PP) plate using an air spray gun such that the dried coating film thickness became 30 $\mu$m, and then dried at 23°C for 15 minutes. Then, the resultant was baked at a predetermined temperature for 30 minutes to obtain a cured coating film. The resultant cured coating film was left at 23°C for one hour, and then removed from the PP plate. Then, the mass of the resultant (hereinafter, abbreviated as "mass before immersion") was accurately weighed, and then the resultant was immersed in acetone at 20°C for 24 hours. Then, the mass after immersion (hereinafter, abbreviated as "mass of undissolved portion") was accurately weighed. Then, the ratio (gel fraction) of the mass of undissolved portion to the mass before immersion was calculated. Then, the calculated gel fraction was used to evaluate the curability at a low temperature in accordance with the following evaluation criteria.

(Evaluation criteria)

| | |
|---|---|
| ◎: | The gel fraction was 80% by mass or more at 80°C. |
| ○: | The gel fraction was 80% by mass or more a 90°C. |
| △: | The gel fraction was 80% by mass or more at 100°C. |
| △×: | The gel fraction was 70% by mass or more and less than 80% by mass at 100°C. |
| ×: | The gel fraction was less than 70% by mass at 110°C. |

[Evaluation 2] Solvent resistance

Each one-component coating composition prepared in example or comparative example was coated on a glass plate using an air spray gun such that the dried coating film thickness became 30 $\mu$m, and then dried at 23°C for 15 minutes.

Then, the resultant was baked at a predetermined temperature for 30 minutes to obtain a cured coating film. The resultant cured coating film was left at 23°C for one hour, and then cotton pads immersed in xylene and ethanol, respectively, were placed on the cured coating film, followed by leaving the resultant at a predetermined temperature (80°C or 100°C) for 5 minutes to observe the external appearance of the resultant coating film.

(Evaluation criteria)

| ⊚: | The resultant coating film was not changed. |
|---|---|
| ◯: | The resultant coating film was not whitened or swollen. |
| △: | The resultant coating film was swollen. |
| ✕: | The resultant coating film was dissolved. |

[Evaluation 3] External appearance of coating film

Each one-component coating composition was coated on a glass plate using an applicator such that the dried coating film thickness became 30 μm. Then, the resultant was baked at 80°C for 30 minutes to obtain a cured coating film. Extraneous substances in the resultant cured coating film were visually observed to evaluate the external appearance of the coating film in accordance with the following evaluation criteria.

(Evaluation criteria)

| ⊚: | No extraneous substance was observed. |
|---|---|
| ◯: | One to five extraneous substances were observed. |
| △: | Six to ten extraneous substances were observed. |
| ✕: | Eleven or more extraneous substances were observed. |

[Evaluation 4] Storage stability of one-component coating composition

The storage stability was evaluated by evaluating the external appearance of each one-component coating composition after being stored at 40°C for ten days in accordance with the following evaluation criteria.

(Evaluation criteria)

| ∘: | Liquid state (coatable state after being stored at 40°C for ten days) |
|---|---|
| △: | Partially-precipitated |
| ✕: | Gelating |

<Synthesis of polyisocyanate>

[Synthesis Example 1]

(Synthesis of polyisocyanate P-1)

600 parts by mass of HDI and a half amount of 60 parts by mass of polycaprolactonetriol (manufactured by Daicel Corporation, "PLACCEL 303" (trade name), the average hydroxyl group number was 3, and the number-average molecular weight was 310) (hereinafter, may be abbreviated as "PLC 303") were charged in a four-necked flask equipped with a stirrer, a thermometer, a reflux cooling tube, a nitrogen inlet tube and a dropping funnel in a nitrogen atmosphere. Then, the mixture was reacted while being stirred in a reaction container at 80°C for 30 minutes, followed by adding the remaining half amount of the PLC 303 thereto to allow the urethane-forming reaction to proceed for an additional hour. The temperature in the reaction container was set at 70°C, and tetramethylammonium hydroxide was added to the reaction container, followed by adding phosphoric acid to the resultant when the yield became 47% by mass, so as to terminate the reaction. The reaction liquid was filtered, and then unreacted HDI was removed therefrom using a thin-film distillation device to obtain a polyisocyanate P-1.

[Synthesis Examples 2 to 4]

(Synthesis of polyisocyanates P-2 to P-4)

Each polyisocyanate was synthesized in the same manner as that in Synthesis Example 1, except that the constitution and the formulation amount used were as shown in Table 1.

[Synthesis Example 5]

(Synthesis of polyisocyanate P-5)

1,000 parts by mass of HDI and 2 parts by mass of 2-ethylhexan-1,3-diol were charged in a four-necked flask equipped with a thermometer, a stirrer blade, and a reflux cooling tube in a nitrogen gas flow. The temperature in the reaction container was maintained at 70°C while conducting stirring. Tetramethylammonium hydroxide was added to the resultant, and phosphoric acid was added thereto when the yield became 40% by mass, so as to terminate the reaction. The reaction liquid was filtered, and unreacted HDI was removed therefrom using a thin-film distillation device to obtain a polyisocyanate P-5.

The constitution, the formulation amount and the physical property of each polyisocyanate are shown in Table 1.

In the Table 1, abbreviations of polyols indicate the following polyols.

(Polyol)

PLC 303: "PLACCEL 303" (trade name) manufactured by Daicel Corporation, in which the average hydroxyl group number was 3, and the number-average molecular weight was 310.

PLC 308: "PLACCEL 308" (trade name) manufactured by Daicel Corporation, in which the average hydroxyl group number was 3, and the number-average molecular weight was 850.

PLC 312: "PLACCEL 312" (trade name) manufactured by Daicel Corporation, in which the average hydroxyl group number was 3, and the number-average molecular weight was 1250.

Table 1

| | | | Synthesis Example 1 | Synthesis Example 2 | Synthesis Example 3 | Synthesis Example 4 | Synthesis Example 5 |
|---|---|---|---|---|---|---|---|
| Polyisocyanate composition | | | P-1 | P-2 | P-3 | P-4 | P-5 |
| Constitution | HDI | g | 600 | 600 | 600 | 600 | 1000 |
| | IPDI | g | | | | 257 | |
| | Polyol | Type | PLC 303 | PLC 308 | PLC 312 | PLC 308 | |
| | | Average number of OH | 3 | 3 | 3 | 3 | |
| | | Mass (g) | 60 | 122 | 179 | 176 | |
| Physical | Yield | % by mass | 47% | 55% | 59% | 53% | 40% |
| | HDI/IPDI | | 100/0 | 100/0 | 100/0 | 79/21 | 100/0 |

(continued)

|  |  |  | Synthesis Example 1 | Synthesis Example 2 | Synthesis Example 3 | Synthesis Example 4 | Synthesis Example 5 |
|---|---|---|---|---|---|---|---|
| property | PO amount | % by mass | 19% | 31% | 39% | 32% | 0% |
|  | Molecular weight | Mn | 1,450 | 1,820 | 1,950 | 1,697 | 655 |
|  |  | Mw | 4,920 | 9,870 | 10,510 | 7,496 | 812 |
|  |  | Mw/Mn | 3.4 | 5.4 | 5.4 | 4.4 | 1.2 |
|  | NCO content | % by mass | 17.60% | 15.00% | 13.40% | 13.40% | 21.80% |
|  | Average number of NCO |  | 6.1 | 6.5 | 6.2 | 5.4 | 3.4 |

<Preparation of blocked polyisocyanate composition>

[Example 1] (reference example)

(Preparation of blocked polyisocyanate composition BL-a1)

30.4 parts by mass of 1,2,3-triazole was added gradually to 100 parts by mass of the polyisocyanate P-1 obtained in Synthesis Example 1 in a four-necked flask equipped with a stirrer, a thermometer, a reflux cooling tube, and a nitrogen inlet tube in a nitrogen atmosphere, and then stirred at a temperature of 80°C or more and less than 120°C for approximately one hour to four hours to allow the reaction to proceed. Then, the FT-IR spectrum was measured to confirm that isocyanate groups were blocked. Then, 84.5 parts by mass of N,N-dimethylformamide was added to the reaction liquid and then stirred at 60°C until the mixture became homogeneous to obtain a blocked polyisocyanate composition BL-a1.

[Examples 2 to 4 (reference examples) and 7 to 10 (reference examples) and Comparative Example 1]

(Preparation of blocked polyisocyanate compositions BL-a2 to BL-a4, BL-a7 to BL-a9, BL-b1 and BL-b2)

Each blocked polyisocyanate composition was prepared in the same manner as that in Example 1, except that the constitution and the formulation amount used were as shown in Tables 2 to 3.

[Example 5] (reference example)

(Preparation of blocked polyisocyanate composition BL-a5)

23.1 parts by mass of 1,2,3-triazole was added gradually to 100 parts by mass of the polyisocyanate P-3 obtained in Synthesis Example 3 in a four-necked flask equipped with a stirrer, a thermometer, a reflux cooling tube, and a nitrogen inlet tube in a nitrogen atmosphere, and then stirred at a temperature of 80°C or more and less than 120°C for approximately one hour to four hours to allow the reaction to proceed. Then, the FT-IR spectrum was measured to confirm that isocyanate groups were blocked. Then, 75.6 parts by mass of N,N-dimethylformamide was added to the reaction liquid and then stirred at 60°C until the mixture became homogeneous. In addition, 4.7 parts by mass of methanol solution containing 56% by mass of benzyltrimethylammonium caprate was added to the resultant to obtain a blocked polyisocyanate composition BL-a5.

[Example 6] (according to the invention)

(Preparation of blocked polyisocyanate composition BL-a6)

A blocked polyisocyanate composition BL-a6 was prepared in the same manner as that in Example 5, except that the constitution and the formulation amount used were as shown in Table 3.

The constitution, the formulation amount and the physical property of each blocked polyisocyanate composition are shown in the following Tables 2 and 3.

In the Tables 2 and 3, types of blocking agents, carboxylate salts and solvents are shown below. In the following tables, the same indications are used.

(Blocking agents)

| | |
|---|---|
| B-1: | 3,5-dimethylpyrazole |
| B-2: | 1,2,3-triazole |
| B-3: | 1,2,4 - triazole |
| B-4: | methylethylketoxime |

(Carboxylate salts)

C-1: benzyltrimethylammonium caprate (methanol solution containing 56% by mass of benzyltrimethylammonium caprate relative to the total mass of the solution)

C-4-1: sodium propionate (methanol solution containing 10% by mass of sodium propionate relative to the total mass of the solution)

(Solvents)

DMF: N,N-dimethylformamide

DPM: dipropylene glycol monomethyl ether

Table 2

| | | Example 1 | Example 2 | Example 3 | Example 4 | Example 5 |
|---|---|---|---|---|---|---|
| | | BL-a1 | BL-a2 | BL-a3 | BL-a4 | BL-a5 |
| Polyisocyanate (parts by mass) | P-1 | 100 | | | | |
| | P-2 | | | 100 | | |
| | P-3 | | | | 100 | 100 |
| | P-4 | | | | | |
| | P-5 | | 100 | | | |
| Blocking agent (parts by mass) | B-1 | | | | | |
| | B-2 | 30.4 | 37.6 | | | 23.1 |
| | B-3 | | | 25.9 | 23.1 | |
| | B-4 | | | | | |
| Carboxylate salt (parts by mass) | C-1 | | | | | 4.7 |
| | C-4-1 | | | | | |
| Solvent (parts by mass) | DPM | | | | | |
| | DMF | 84.5 | 88.8 | 81.9 | 80.2 | 75.6 |
| Solid content | % by mass | 60 | 60 | 60 | 60 | 60 |

(continued)

|  | | Example 1 | Example 2 | Example 3 | Example 4 | Example 5 |
|---|---|---|---|---|---|---|
|  | | BL-a1 | BL-a2 | BL-a3 | BL-a4 | BL-a5 |
| Effective NCO% | % by mass | 8.2 | 9.6 | 7.2 | 6.6 | 6.6 |

Table 3

| | | Example 6 | Example 7 | Example 8 | Example 9 | Example 10 | Comparative Example 1 |
|---|---|---|---|---|---|---|---|
| | | BL-a6 | BL-a7 | BL-a8 | BL-a9 | BL-b1 | BL-b2 |
| Polyisocyanate (parts by mass) | P-1 | | | | | 100 | 100 |
| | P-2 | | | 100 | 100 | | |
| | P-3 | | | | | | |
| | P-4 | 100 | 100 | | | | |
| | P-5 | | | | | | |
| Blocking agent (parts by mass) | B-1 | | | 12.0 | 8.6 | 42.2 | |
| | B-2 | | | | 19.7 | | |
| | B-3 | 23.1 | 23.1 | 17.3 | | | |
| | B-4 | | | | | | 38.3 |
| Carboxylate salt (parts by mass) | C-1 | | | | | | |
| | C-4-1 | 40.7 | | | | | |
| Solvent (parts by mass) | DPM | | | 83.3 | 82.7 | 91.5 | 89.2 |
| | DMF | 39.5 | 80.2 | | | | |
| Solid content | % by mass | 60 | 60 | 60 | 60 | 60 | 60 |
| Effective NCO% | % by mass | 6.6 | 6.6 | 7.1 | 7.1 | 7.5 | 7.7 |

<Preparation of one-component coating composition>

[Example 11] (reference example)

(Preparation of one-component coating composition D-a1)

10.0 parts by mass of an acrylic polyol ("Setalux 1767" (trade name) manufactured by Allnex Ltd., in which the hydroxyl value was 150 mgKOH/g resin, and the solid content was 65% by mass), 8.9 parts by mass of the blocked polyisocyanate composition BL-a1 prepared in Example 1 and 10.3 parts by mass of DMF were formulated. Then, 0.4 parts by mass of tetramethylammonium propionate (methanol solution containing 47% by mass of tetramethylammonium propionate relative to the total mass of the solution), and 0.0267 parts by mass of a urethane-forming catalyst U-810 (manufactured by NITTO KASEI CO., LTD., dioctyltin) were added thereto and then mixed until the mixture became homogeneous to obtain a one-component coating composition D-a1.

[Example 16 (according to the invention), Examples 12-15, 17-39 (reference examples) and Comparative Examples 2 to 6]

(Preparation of one-component coating compositions D-a2 to D-a29 and D-b1 to D-b5)

Each one-component coating composition was prepared in the same manner as that in Example 11, except that the constitution and the formulation amount used were as shown in Tables 4 to 10.
The constitution, the formulation amount, the physical property, and the evaluation result of each one-component coating composition are shown in the following Tables 4 to 17.
In the Tables 4 to 10, types of carboxylate salts and urethane-forming catalysts are shown below. In the following tables, the same indications are used.

(Carboxylate salts of quaternary ammonium cation)

C-1: benzyltrimethylammonium caprate (methanol solution containing 56% by mass of benzyltrimethylammonium caprate relative to the total mass of the solution)
C-2: tetramethylammonium caprate (methanol solution containing 47% by mass of tetramethylammonium caprate relative to the total mass of the solution)
C-3: tetramethylammonium propionate (methanol solution containing 47% by mass of tetramethylammonium propionate relative to the total mass of the solution)

(Metal carboxylates)

C-4-1: sodium propionate (methanol solution containing 10% by mass of sodium propionate relative to the total mass of the solution: monovalent metal salt)
C-5-1: potassium acetate (methanol solution containing 10% by mass of potassium acetate relative to the total mass of the solution: monovalent metal salt)
C-6-1: potassium propionate (methanol solution containing 10% by mass of potassium propionate relative to the total mass of the solution: monovalent metal salt)
C-7-1: potassium 2-ethylhexanoate (2-ethylhexanoic acid solution containing 15% by mass of potassium 2-ethylhexanoate relative to the total mass of the solution: monovalent metal salt)
C-8-1: cesium acetate (methanol solution containing 10% by mass of cesium acetate relative to the total mass of the solution: monovalent metal salt)
C-9-1: lithium acetate (methanol solution containing 10% by mass of cesium acetate relative to the total mass of the solution: monovalent metal salt)
C-10: bismuth 2-ethylhexanoate (2-ethylhexanoic acid solution containing 25% by mass of bismuth 2-ethylhexanoate relative to the total mass of the solution: trivalent metal salt)
C-11: tin 2-ethylhexanoate (divalent metal salt)
C-12: iron 2-ethylhexanoate (mineral spirit solution containing 6% by mass of iron relative to the total mass of the solution: trivalent metal salt)

(Urethane-forming catalysts)

U-810: dioctyltin (manufactured by NITTO KASEI CO., LTD.)

Table 4

| | | Example 11 | Example 12 | Example 13 | Example 14 | Example 15 |
| --- | --- | --- | --- | --- | --- | --- |
| | | D-a1 | D-a2 | D-a3 | D-a4 | D-a5 |
| Main agent (parts by mass) | SETALUX 1767 | 10.0 | 10.0 | 10.0 | 10.0 | 10.0 |

(continued)

| | | Example 11 | Example 12 | Example 13 | Example 14 | Example 15 |
|---|---|---|---|---|---|---|
| | | D-a1 | D-a2 | D-a3 | D-a4 | D-a5 |
| Blocking agent (parts by mass) | BL-a1 | 8.9 | | | | |
| | BL-a2 | | 7.6 | | | |
| | BL-a3 | | | 10.1 | | |
| | BL-a4 | | | | 11.1 | |
| | BL-a5 | | | | | 11.1 |
| | BL-a6 | | | | | |
| | BL-a7 | | | | | |
| | BL-a8 | | | | | |
| | BL-a9 | | | | | |
| | BL-b1 | | | | | |
| | BL-b2 | | | | | |
| Carboxylate salt (parts by mass) | C-1 | | 0.2 | | | |
| | C-2 | | | | | |
| | C-3 | 0.4 | | | | |
| | C-4-1 | | | 4.2 | 1.8 | |
| | C-5-1 | | | | | |
| | C-6-1 | | | | | |
| | C-7-1 | | | | | |
| | C-8-1 | | | | | |
| | C-9-1 | | | | | |
| | C-10 | | | | | |
| | C-11 | | | | | |
| | C-12 | | | | | |
| Urethane-forming catalyst (parts by mass) | U-810 | 0.0267 | 0.0228 | 0.0303 | 0.0332 | 0.0332 |
| Solvent (parts by mass) | DMF | 10.3 | 9.8 | 7.1 | 6.1 | 11.6 |
| X/n(A) | mass ratio | 1.0 | 0.9 | 0.3 | 0.3 | 0.9 |
| Amount of X | % by mass | 1.8 | 1.4 | 1.7 | 0.6 | 1.0 |

Table 5

| | | Example 16 | Example 17 | Example 18 | Example 19 | Example 20 |
|---|---|---|---|---|---|---|
| | | D-a6 | D-a7 | D-a8 | D-a9 | D-a10 |
| Main agent (parts by mass ) | SETALUX 1767 | 10.0 | 10.0 | 10.0 | 10.0 | 10.0 |

(continued)

| | | Example 16 | Example 17 | Example 18 | Example 19 | Example 20 |
|---|---|---|---|---|---|---|
| | | D-a6 | D-a7 | D-a8 | D-a9 | D-a10 |
| Blocking agent (parts by mass) | BL-a1 | | | | | |
| | BL-a2 | | | | | |
| | BL-a3 | | | | | 10.1 |
| | BL-a4 | | | | | |
| | BL-a5 | | | | | |
| | BL-a6 | 11.1 | | | | |
| | BL-a7 | | 11.1 | | | |
| | BL-a8 | | | 10.3 | | |
| | BL-a9 | | | | 10.3 | |
| | BL-b1 | | | | | |
| | BL-b2 | | | | | |
| Carboxylate salt (parts by mass) | C-1 | | | | | |
| | C-2 | | | | | |
| | C-3 | | | | | |
| | C-4-1 | | | | | |
| | C-5-1 | | 3.0 | 2.2 | | |
| | C-6-1 | | | | 1.7 | |
| | C-7-1 | | | | | 5.9 |
| | C-8-1 | | | | | |
| | C-9-1 | | | | | |
| | C-10 | | | | | |
| | C-11 | | | | | |
| | C-12 | | | | | |
| Urethane-forming catalyst (parts by mass) | U-810 | 0.0332 | 0.0332 | 0.0310 | 0.0308 | 0.0303 |
| Solvent (parts by mass) | DMF | 10.7 | 8.8 | 9.2 | 9.7 | 5.4 |
| X/n(A) | mass ratio | 0.3 | 0.7 | 0.7 | 0.5 | 0.3 |
| Amount of X | % by mass | 0.8 | 1.8 | 1.4 | 0.9 | 3.1 |

Table 6

| | | Example 21 | Example 22 | Example 23 | Example 24 | Example 25 |
|---|---|---|---|---|---|---|
| | | D-a11 | D-a12 | D-a13 | D-a14 | D-a15 |
| Main agent (parts by mass) | SETALUX 1767 | 10.0 | 10.0 | 10.0 | 10.0 | 10.0 |

(continued)

| | | Example 21 | Example 22 | Example 23 | Example 24 | Example 25 |
|---|---|---|---|---|---|---|
| | | D-a11 | D-a12 | D-a13 | D-a14 | D-a15 |
| Blocking agent (parts by mass) | BL-a1 | | | | | |
| | BL-a2 | | | | | |
| | BL-a3 | 10.1 | 10.1 | 10.1 | | |
| | BL-a4 | | | | | |
| | BL-a5 | | | | | |
| | BL-a6 | | | | | |
| | BL-a7 | | | | 11.1 | 11.1 |
| | BL-a8 | | | | | |
| | BL-a9 | | | | | |
| | BL-b1 | | | | | |
| | BL-b2 | | | | | |
| Carboxylate salt (parts by mass) | C-1 | | | | | |
| | C-2 | | | | | |
| | C-3 | | | | | |
| | C-4-1 | | | | 6.0. | |
| | C-5-1 | | | | | 2.0 |
| | C-6-1 | | | | | |
| | C-7-1 | | | | | |
| | C-8-1 | 1.8 | | | | |
| | C-9-1 | | 1.2 | | | |
| | C-10 | | | 1.2 | | |
| | C-11 | | | | | |
| | C-12 | | | | | |
| Urethane-forming catalyst (parts by mass) | U-810 | 0.0303 | 0.0303 | 0.0303 | 0.0332 | 0.0332 |
| Solvent (parts by mass) | DMF | 9.5 | 10.1 | 10.0 | 5.7 | 9.8 |
| X/n(A) | mass ratio | 2.2 | 0.1 | 0.5 | 0.3 | 0.7 |
| Amount of X | % by mass | 2.1 | 0.2 | 1.7 | 2.2 | 1.2 |

Table 7

| | | Example 26 | Example 27 | Example 28 | Example 29 | Example 30 |
|---|---|---|---|---|---|---|
| | | D-a16 | D-a17 | D-a18 | D-a19 | D-a20 |
| Main agent (parts by mass) | SETALUX 1767 | 10.0 | 10.0 | 10.0 | 10.0 | 10.0 |

(continued)

| | | Example 26 | Example 27 | Example 28 | Example 29 | Example 30 |
|---|---|---|---|---|---|---|
| | | D-a16 | D-a17 | D-a18 | D-a19 | D-a20 |
| Blocking agent (parts by mass) | BL-a1 | | | | | |
| | BL-a2 | | | | | 7.6 |
| | BL-a3 | | 10.1 | 10.1 | | |
| | BL-a4 | | | | 11.1 | |
| | BL-a5 | | | | | |
| | BL-a6 | | | | | |
| | BL-a7 | 11.1 | | | | |
| | BL-a8 | | | | | |
| | BL-a9 | | | | | |
| | BL-b1 | | | | | |
| | BL-b2 | | | | | |
| Carboxylate salt (parts by mass) | C-1 | | | | | |
| | C-2 | | | | | |
| | C-3 | | | | | |
| | C-4-1 | | 4.5 | | 4.7 | 3.2 |
| | C-5-1 | | | 3.2 | | |
| | C-6-1 | 3.8 | | | | |
| | C-7-1 | | | | | |
| | C-8-1 | | | | | |
| | C-9-1 | | | | | |
| | C-10 | | | | | |
| | C-11 | | | | | |
| | C-12 | | | | | |
| Urethane-forming catalyst (parts by mass) | U-810 | 0.0332 | | | 0.0332 | 0.0227 |
| Solvent (parts by mass) | DMF | 8.0 | 6.8 | 8.2 | 7.1 | 6.8 |
| X/n(A) | mass ratio | 0.5 | 0.3 | 0.7 | 0.3 | 0.3 |
| Amount of X | % by mass | 2.0 | 1.8 | 2.1 | 1.7 | 1.7 |

Table 8

| | | Example 31 | Example 32 | Example 33 | Example 34 | Example 35 |
|---|---|---|---|---|---|---|
| | | D-a21 | D-a22 | D-a23 | D-a24 | D-a25 |
| Main agent (parts by mass) | SETALUX 1767 | 10.0 | 10.0 | 10.0 | 10.0 | 10.0 |

(continued)

| | | Example 31 | Example 32 | Example 33 | Example 34 | Example 35 |
|---|---|---|---|---|---|---|
| | | D-a21 | D-a22 | D-a23 | D-a24 | D-a25 |
| Blocking agent (parts by mass) | BL-a1 | | | | | |
| | BL-a2 | | | | | |
| | BL-a3 | | | | | |
| | BL-a4 | | | | | |
| | BL-a5 | | | | | |
| | BL-a6 | | | | | |
| | BL-a7 | 11.1 | 11.1 | 11.1 | 11.1 | 11.1 |
| | BL-a8 | | | | | |
| | BL-a9 | | | | | |
| | BL-b1 | | | | | |
| | BL-b2 | | | | | |
| Carboxylate salt (parts by mass) | C-1 | | | | | |
| | C-2 | | | | | |
| | C-3 | | | | | |
| | C-4-1 | | | | | |
| | C-5-1 | | | | | |
| | C-6-1 | | | | | |
| | C-7-1 | | | | | |
| | C-8-1 | | | | | |
| | C-9-1 | | | | | |
| | C-10 | 3.5 | 1.8 | 3.5 | | |
| | C-11 | | | | 0.4 | |
| | C-12 | | | | | 2.0 |
| Urethane-forming catalyst (parts by mass) | U-810 | 0.0332 | 0.0332 | | 0.0332 | 0.0332 |
| Solvent (parts by mass) | DMF | 8.2 | 9.9 | 8.3 | 11.4 | 11.1 |
| X/n(A) | mass ratio | 0.5 | 0.5 | 0.5 | 0.4 | 0.1 |
| Amount of X | % by mass | 4.4 | 2.2 | 4.4 | 1.8 | 1.8 |

Table 9

| | | Example 36 | Example 37 | Example 38 | Example 39 |
|---|---|---|---|---|---|
| | | D-a26 | D-a27 | D-a28 | D-a29 |
| Main agent (parts by mass) | SETALUX 1767 | 10.0 | 10.0 | 10.0 | 10.0 |

(continued)

|  |  | Example 36 | Example 37 | Example 38 | Example 39 |
|---|---|---|---|---|---|
|  |  | D-a26 | D-a27 | D-a28 | D-a29 |
| Blocking agent (parts by mass) | BL-a1 |  |  |  | 8.9 |
|  | BL-a2 |  |  |  |  |
|  | BL-a3 |  |  |  |  |
|  | BL-a4 |  |  |  |  |
|  | BL-a5 |  |  |  |  |
|  | BL-a6 |  |  |  |  |
|  | BL-a7 | 11.1 |  |  |  |
|  | BL-a8 |  |  |  |  |
|  | BL-a9 |  |  |  |  |
|  | BL-b1 |  | 9.7 | 9.7 |  |
|  | BL-b2 |  |  |  |  |
| Carboxylate salt (parts by mass) | C-1 |  |  |  |  |
|  | C-2 |  |  |  |  |
|  | C-3 |  |  |  |  |
|  | C-4-1 |  |  | 4.1 |  |
|  | C-5-1 |  |  |  |  |
|  | C-6-1 |  |  |  |  |
|  | C-7-1 |  |  |  |  |
|  | C-8-1 |  |  |  |  |
|  | C-9-1 |  |  |  |  |
|  | C-10 | 8 | 3.2 |  | 3.1 |
|  | C-11 |  |  |  |  |
|  | C-12 |  |  |  |  |
| Urethane-forming catalyst (parts by mass) | U-810 | 0.0332 | 0.0291 | 0.0291 | 0.0267 |
| Solvent (parts by mass) | DMF | 3.7 | 7.9 | 7.0 | 7.6 |
| X/n(A) | mass ratio | 0.5 | 0.5 | 0.3 | 0.5 |
| Amount of X | % by mass | 9.9 | 4.4 | 1.7 | 4.7 |

Table 10

|  |  | Comparative Example 2 | Comparative Example 3 | Comparative Example 4 | Comparative Example 5 | Comparative Example 6 |
|---|---|---|---|---|---|---|
|  |  | D-b1 | D-b2 | D-b3 | D-b4 | D-b5 |
| Main agent (parts by mass) | SETALUX 1767 | 10 | 10 | 10 | 10.0 | 10.0 |

(continued)

| | | Comparative Example 2 | Comparative Example 3 | Comparative Example 4 | Comparative Example 5 | Comparative Example 6 |
|---|---|---|---|---|---|---|
| | | D-b1 | D-b2 | D-b3 | D-b4 | D-b5 |
| Blocking agent (parts by mass) | BL-a1 | | | | | |
| | BL-a2 | | | | | |
| | BL-a3 | 10.1 | 10.1 | | | |
| | BL-a4 | | | | | |
| | BL-a5 | | | | | |
| | BL-a6 | | | | | |
| | BL-a7 | | | 11.1 | | |
| | BL-a8 | | | | | |
| | BL-a9 | | | | | |
| | BL-b1 | | | | 9.7 | |
| | BL-b2 | | | | | 9.5 |
| Carboxylate salt (parts by mass) | C-1 | | | | | |
| | C-2 | | | | | |
| | C-3 | | | | | |
| | C-4-1 | | | | | |
| | C-5-1 | | | | | |
| | C-6-1 | | | | | |
| | C-7-1 | | | | | |
| | C-8-1 | | | | | |
| | C-9-1 | | | | | |
| | C-10 | | | 19.3 | | 3.1 |
| | C-11 | | | | | |
| | C-12 | | | | | |
| Urethane-forming catalyst (parts by mass) | U-810 | | 0.0303 | 0.0332 | 0.0291 | 0.0284 |
| Solvent (parts by mass) | DMF | 11.3 | 11.3 | | 11.1 | 7.8 |
| X/n(A) | mass ratio | 0.0 | 0.0 | 0.5 | 0.0 | 0.5 |
| Amount of X | % by mass | 0.0 | 0.0 | 23.7 | | 4.5 |

Table 11

| | | Example 11 | Example 12 | Example 13 | Example 14 | Example 15 |
|---|---|---|---|---|---|---|
| Evaluation | Curability at a low temperature | ◎ | ◎ | ○ | △ | ○ |
| | Solvent resistance (80°C) ethanol | ○ | ○ | ○ | ○ | ○ |
| | Solvent resistance (80°C) xylene | △ | △ | △ | △ | △ |

Table 12

| | | Example 16 | Example 17 | Example 18 | Example 19 | Example 20 |
|---|---|---|---|---|---|---|
| Evaluation | Curability at a low temperature | ○ | ◎ | ○ | ◎ | △ |
| | Solvent resistance(80°C) ethanol | ○ | ○ | ○ | ○ | ○ |
| | Solvent resistance(80°C) xylene | △ | △ | △ | △ | △ |

Table 13

| | | Example 21 | Example 22 | Example 23 | Example 24 | Example 25 |
|---|---|---|---|---|---|---|
| Evaluation | Curability at a low temperature | ◎ | △ | △ | ◎ | ○ |
| | Solvent resistance(80°C) ethanol | ○ | ○ | ○ | ○ | ○ |
| | Solvent resistance(80°C) xylene | △ | △ | ○ | △ | △ |

Table 14

| | | Example 26 | Example 27 | Example 28 | Example 29 | Example 30 |
|---|---|---|---|---|---|---|
| Evaluation | Curability at a low temperature | ◎ | △ | △ | ◎ | ◎ |
| | Solvent resistance(80°C) ethanol | ○ | ○ | ○ | ○ | ○ |
| | Solvent resistance(80°C) xylene | △ | △ | △ | △ | △ |

Table 15

| | | Example 31 | Example 32 | Example 33 | Example 34 | Example 35 | Example 36 |
|---|---|---|---|---|---|---|---|
| Evaluation | Curability at a low temperature | ◎ | ○ | ◎ | △ | ○ | ◎ |
| | Solvent resistance (80°C) ethanol | ○ | ○ | ○ | △ | ○ | ○ |
| | Solvent resistance(80°C) xylene | ○ | ○ | ○ | △ | ○ | ○ |

Table 16

| | | Ex. 37 | Ex. 38 | Ex. 39 | C. Ex. 2 | C. Ex. 3 | C. Ex. 4 |
|---|---|---|---|---|---|---|---|
| Evaluation | Curability at a low temperature | △× | △× | ○ | × | × | × |
| | Solvent resistance (80°C) ethanol | × | × | ○ | × | × | × |
| | Solvent resistance (80°C) xylene | × | × | ○ | × | × | × |
| | Solvent resistance (100°C) ethanol | ○ | △ | — | × | × | — |
| | solvent resistance(100°C) xylene | ○ | △ | — | × | × | — |

(Ex.: Example, C. Ex: Comparative Example)

Table 17

| | | Comparative Example 5 | Comparative Example 6 |
|---|---|---|---|
| Evaluation | Curability at a low temperature | × | × |
| | Solvent resistance(80°C) ethanol | × | × |
| | Solvent resistance(80°C) xylene | × | × |
| | solvent resistance(100°C) ethanol | × | × |
| | solvent resistance(100°C) xylene | × | × |

It was confirmed from the tables that the one-component coating composition containing both the blocked polyisocyanate obtained using the triazole-based blocking agent and the carboxylate salt had favorable curability at a low temperature and favorable solvent resistance when made into a coating film.

Among the one-component coating compositions D-a27, D-a29 and D-b5 in which bismuth 2-ethylhexanoate was used as a carboxylate salt (Examples 37 and 39 and Comparative Example 6), the one-component coating composition D-a29 in which a blocked polyisocyanate prepared by using 1,2,3-triazole as a blocking agent was used had favorable curability at a low temperature and favorable solvent resistance when made into a coating film, while the one-component coating composition D-b5 in which a blocked polyisocyanate prepared by using methylethylketoxime as a blocking agent was used had a poor curability at a low temperature and poor solvent resistance when made into a coating film.

Among the one-component coating compositions D-a10 to D-a13 in which the type and the formulation amount of the carboxylate salt were different from each other (Examples 20 to 23), the one-component coating composition D-a11 (Example 21) in which cesium acetate was used as a carboxylate salt had a particularly favorable curability at a low temperature when made into a coating film.

Among the one-component coating compositions D-a12 and D-a13 in which the type of the carboxylate salt was different from each other (Examples 22 and 23), the solvent resistance of the one-component coating composition D-a13 in which a trivalent carboxylate salt (bismuth 2-ethylhexanoate) was used as a carboxylate salt was more favorable than that of the one-component coating composition D-a12 in which a monovalent carboxylate salt (lithium acetate) was used.

In a similar manner, among the one-component coating compositions D-a15 and D-a25 in which the type of the carboxylate salt was different from each other (Examples 25 and 35), the solvent resistance of the one-component coating composition D-a25 in which a trivalent carboxylate salt (iron 2-ethylhexanoate) was used as a carboxylate salt was superior to that of the one-component coating composition D-a15 in which a monovalent carboxylate salt (potassium acetate) was used.

In addition, among the one-component coating compositions D-a22 and D-a24 in which the type of the carboxylate salt was different from each other (Examples 32 and 34), the curability at a low temperature and the solvent resistance of the one-component coating composition D-a22 in which a trivalent carboxylate salt (bismuth 2-ethylhexanoate) was used as a carboxylate salt were superior to those of the one-component coating composition D-a24 in which a divalent carboxylate salt (tin 2-ethylhexanoate) was used.

In addition, among the one-component coating compositions D-a14 to D-a16 in which the type and the formulation amount of the carboxylate salt were different from each other (Examples 24 to 26), the curability at a low temperature when made into a coating film of the one-component coating compositions D-a14 and D-a16 (Examples 24 and 26) in which sodium propionate or potassium propionate was used as a carboxylate salt was particularly favorable.

In addition, among the one-component coating compositions D-a3 and D-a17 in which the presence or the absence of the urethane-forming catalyst was different from each other (Examples 13 and 27), the curability at a low temperature when made into a coating film of the one-component coating composition D-a3 (Example 13) in which the urethane-forming catalyst was formulated was more favorable.

In contrast, the curability at a low temperature when made into a coating film of the one-component coating composition in which both a blocked polyisocyanate obtained using a blocking agent other than the azole-based blocking agent and a carboxylate salt were contained or the one-component coating composition in which a blocked polyisocyanate obtained using a triazole-based blocking agent was contained but no carboxylate salt was contained was unfavorable.

It was confirmed that the solvent resistance at 100°C was improved by formulating the blocked polyisocyanate obtained using a pyrazole-based blocking agent together with the carboxylate salt.

<Preparation 2 of blocked polyisocyanate composition>

[Example 40] (reference example)

(Preparation of blocked polyisocyanate composition BL-a10)

100 parts by mass of the polyisocyanate P-1 obtained in Synthesis Example 1 and 28.9 parts by mass of methoxypolyethylene glycol (MPG-081, ethylene oxide repeating units: 15 units, manufactured by NIPPON NYUKAZAI CO., LTD.) were charged in a four-necked flask equipped with a thermometer, a stirrer blade, and a reflux cooling tube, in a nitrogen gas flow, and then the mixture was heated and stirred at 120°C for two hours. Then, the reaction liquid was cooled to approximately 80°C or more and 110°C or less, and then 38.0 parts by mass of 3,5-dimethylpyrazole was charged therein to allow the blocking reaction to proceed at approximately 80°C or more and 120°C or less for four hours. Then, FT-IR spectrum was measured to confirm that isocyanate groups were blocked, followed by adding 383.5 parts by mass of water to the resultant. The mixture was stirred at 50°C until the mixture became homogeneous to obtain a blocked polyisocyanate composition BL-a10.

[Examples 41 to 46 and 50 to 52] (reference examples)

(Preparation of blocked polyisocyanate compositions BL-a11 to BL-a16 and BL-a20 to BL-a22)

Each blocked polyisocyanate composition was prepared in a similar manner to that of Example 39 except that the constitution and the formulation amount used were as shown in Tables 18 to 20.

[Example 47] (reference example)

(Blocked polyisocyanate composition BL-a17)

100 parts by mass of the polyisocyanate P-3 obtained in Synthesis Example 3 and 22.0 parts by mass of MPG-081 were charged in a four-necked flask equipped with a thermometer, a stirrer blade, and a reflux cooling tube, in a nitrogen gas flow, and then the mixture was heated and stirred at 120°C for two hours. Then, the reaction liquid was cooled to approximately 80°C or more and 110°C or less, and then 20.8 parts by mass of 1,2,3-triazole was charged therein to allow the blocking reaction to proceed at approximately 80°C or more and 120°C or less for four hours. Then, FT-IR spectrum was measured to confirm that isocyanate groups were blocked, followed by adding 302.5 parts by mass of water to the resultant and then stirring the mixture at 50°C until the mixture became homogeneous. 27.4 parts by mass of methanol solution containing 56% by mass of benzyltrimethylammonium caprate was added to the reaction liquid to obtain a blocked polyisocyanate composition BL-a17.

[Examples 48, 49] (according to the invention) (Blocked polyisocyanate compositions BL-a18 to BL-a19)

Each blocked polyisocyanate composition was prepared in a similar manner to that of Example 47 except that the constitution and the formulation amount used were as shown in Table 19.

The constitution, formulation amount and physical property of each blocked polyisocyanate composition are shown in the following Tables 18 to 20.

In the Tables 18 to 20, the types of the hydrophilic compound and the carboxylate salt are mentioned below. In the following tables, the same indications were used.

(Hydrophilic compounds)

A-1: methoxypolyethylene glycol (manufactured by NIPPON NYUKAZAI CO., LTD., under the trade name of "MPG-081", ethylene oxide repeating units: 15 units)
A-2: polyethylene glycol monomethyl ether (manufactured by NIPPON NYUKAZAI CO., LTD., under the trade name of "MPG-130", ethylene oxide repeating units: 9.4 units)
A-3: hydroxy pivalic acid

(Carboxylate salts)

C-1: benzyltrimethylammonium caprate (methanol solution containing 56% by mass of benzyltrimethylammonium caprate relative to the total mass of the solution)
C-4-2: sodium propionate
C-5-2: potassium acetate

Table 18

| | | Example 40 | Example 41 | Example 42 | Example 43 | Example 44 |
|---|---|---|---|---|---|---|
| Blocked polyisocyanate composition | | BL-a10 | BL-a11 | BL-a12 | BL-a13 | BL-a14 |
| Polyisocyanate (parts by mass) | P-1 | 100.0 | 100.0 | | | |
| | P-2 | | | | 100.0 | |
| | P-3 | | | | | 100.0 |
| | P-4 | | | | | |
| | P-5 | | | 100.0 | | |
| Hydrophilic compound (parts by | A-1 | 28.9 | | 17.9 | 24.6 | |
| | A-2 | | 17.9 | | | |
| | A-3 | | | | | 1.9 |
| mass) | | | | | | |
| Blocking agent (parts by mass) | B-1 | 38.0 | | | | |
| | B-2 | | 27.3 | 35.7 | | |
| | B-3 | | | | 23.3 | 22.0 |
| Solvent (parts by mass) | water | 383.5 | | | | |
| | DMF | | 94.7 | 99.6 | 96.8 | 80.8 |
| Carboxylate salt (parts by mass) | C-1 | | | | | |
| | C-4-2 | | | | | |
| | C-5-2 | | | | | |

(continued)

|  |  | Example 40 | Example 41 | Example 42 | Example 43 | Example 44 |
|---|---|---|---|---|---|---|
| Blocked polyisocyanate composition |  | BL-a10 | BL-a11 | BL-a12 | BL-a13 | BL-a14 |
| Solid content | % by mass | 30 | 60 | 60 | 60 | 60 |
| Effective NCO% | % by mass | 2.9 | 6.6 | 8.2 | 5.5 | 6.2 |

Table 19

|  |  | Example 45 | Example 46 | Example 47 | Example 48 | Example 49 |
|---|---|---|---|---|---|---|
| Blocked polyisocyanate composition |  | BL-a15 | BL-a16 | BL-a17 | BL-a18 | BL-a19 |
| Polyisocyanate (parts by mass) | P-1 |  | 100.0 |  |  |  |
|  | P-2 |  |  |  |  |  |
|  | P-3 |  |  | 100.0 |  |  |
|  | P-4 | 100.0 |  |  | 100.0 | 100.0 |
|  | P-5 |  |  |  |  |  |
| Hydrophilic compound (parts by mass) | A-1 |  |  | 22.0 | 26.4 | 33.0 |
|  | A-2 | 20.5 | 14.3 |  |  |  |
|  | A-3 |  |  |  |  |  |
| Blocking agent (parts by mass) | B-1 |  |  |  |  |  |
|  | B-2 |  |  | 20.8 |  |  |
|  | B-3 | 19.6 | 27.9 |  | 20.3 | 19.6 |
| Solvent (parts by mass) | water |  |  | 302.5 | 334.2 | 348.6 |
|  | DMF | 91.9 | 92.6 |  |  |  |
| Carboxylate salt (parts by mass) | C-1 |  |  | 27.4 |  |  |
|  | C-4-2 |  |  |  | 5.0 |  |
|  | C-5-2 |  |  |  |  | 4.5 |
| Solid content | % by mass | 60 | 60 | 30 | 30 | 30 |
| Effective NCO% | % by mass | 4.9 | 6.7 | 2.7 | 2.5 | 2.3 |

Table 20

|  |  | Example 50 | Example 51 | Example 52 |
|---|---|---|---|---|
| Blocked polyisocyanate composition |  | BL-a20 | BL-a21 | BL-a22 |
| Polyisocyanate (parts by mass) | P-1 |  |  | 100.0 |
|  | P-2 | 100.0 | 100.0 |  |
|  | P-3 |  |  |  |
|  | P-4 |  |  |  |
|  | P-5 |  |  |  |
| Hydrophilic compound (parts by mass) | A-1 | 24.6 |  | 28.9 |
|  | A-2 |  | 12.2 |  |
|  | A-3 |  |  |  |
| Blocking agent (parts by mass) | B-1 | 10.8 | 7.9 |  |
|  | B-2 |  | 18.1 |  |
|  | B-3 | 15.5 |  | 27.3 |

(continued)

| | | Example 50 | Example 51 | Example 52 |
|---|---|---|---|---|
| Blocked polyisocyanate composition | | BL-a20 | BL-a21 | BL-a22 |
| Solvent (parts by mass) | water | | | |
| | DMF | 98.1 | 89.5 | 101.8 |
| Carboxylate salt (parts by mass) | C-1 | | | |
| | C-4-2 | | | |
| | C-5-2 | | | |
| Solid content | % by mass | 60 | 60 | 60 |
| Effective NCO% | % by mass | 5.4 | 6.1 | 6.1 |

<Preparation 2 of one-component coating composition>

[Example 53] (reference example)

(Preparation of one-component coating composition D-a30)

10.0 parts by mass of an acrylic dispersion (manufactured by Allnex Company, "SETAQUA 6510" (trade name), in which the amount of hydroxyl group was 4.2% (based on resin), and the solid content was 42% by mass) and 15.1 parts by mass of the blocked polyisocyanate BL-a10 prepared in Example 40 were formulated. Then, 0.3 parts by mass of sodium propionate and 0.2262 parts by mass of an aqueous emulsion containing 10% by mass of dibutyltin dilaurate (DBTDL) relative to the total mass of the emulsion (manufactured by Borchers Inc., under the trade name of "LH-10") were added to the mixture to obtain a one-component coating composition D-a30.

[Examples 61, 62 (according to the invention), Examples 54-60, 63-80 (reference examples) and Comparative Examples 7 to 10]

(Preparation of one-component coating compositions D-a31 to D-a57, D-b6 to D-b8, and D-b10)

Each one-component coating composition was prepared in a similar manner to that of Example 53 except that the constitution and the formulation amount used were as shown in Tables 21 to 27.
The constitution, the formulation amount, the physical property and the evaluation result of each one-component coating composition are shown in the following Tables 21 to 33.
In the Tables 21 to 27, the types of the carboxylate salt and the urethane-forming catalyst are mentioned below.

(Carboxylate salts)

C-1: benzyltrimethylammonium caprate (methanol solution containing 56% by mass of benzyltrimethylammonium caprate relative to the total mass of the solution)
C-2: tetramethylammonium caprate (methanol solution containing 47% by mass of tetramethylammonium caprate relative to the total mass of the solution)
C-3: tetramethylammonium propionate (methanol solution containing 47% by mass of tetramethylammonium propionate relative to the total mass of the solution)
C-4-2: sodium propionate
C-5-2: potassium acetate
C-6-2: potassium propionate
C-7-2: potassium 2-ethylhexanoate
C-8-2: cesium acetate
C-9-2: lithium acetate
C-10: bismuth 2-ethylhexanoate (2-ethylhexanoic acid solution containing 25% by mass of bismuth 2-ethylhexanoate relative to the total mass of the solution)

(Urethane-forming catalyst)

LH-10: aqueous emulsion containing 10% by mass of dibutyltin dilaurate (DBTDL) relative to the total mass of the emulsion (manufactured by Borchers Inc., under the trade name of "LH-10")

(External emulsifier)

N707-SF: polyoxyethylene polycyclic phenyl ether sulfate (manufactured by NIPPON NYUKAZAI CO., LTD., under the trade name of "Newcol 07-SF")

Table 21

| | | Example 53 | Example 54 | Example 55 | Example 56 | Example 57 |
|---|---|---|---|---|---|---|
| One-component coating composition | | D-a30 | D-a31 | D-a32 | D-a33 | D-a34 |
| Main agent (parts by mass) | SETAQUA 6510 | 10.0 | 10.0 | 10.0 | 10.0 | 10.0 |
| Blocking agent (parts by mass) | BL-a10 | 15.1 | | | | |
| | BL-a11 | | 6.6 | | | |
| | BL-a12 | | | 5.3 | | |
| | BL-a13 | | | | 7.9 | |
| | BL-a14 | | | | | 7.0 |
| | BL-a15 | | | | | |
| | BL-a16 | | | | | |
| | BL-a17 | | | | | |
| | BL-a18 | | | | | |
| | BL-a19 | | | | | |
| | BL-a20 | | | | | |
| | BL-a21 | | | | | |
| Carboxylate salt (parts by mass) | C-1 | | | 0.2 | | |
| | C-2 | | | | | |
| | C-3 | | 0.2 | | | |
| | C-4-2 | 0.3 | | | | 0.3 |
| | C-5-2 | | | | 0.2 | |
| | C-6-2 | | | | | |
| | C-7-2 | | | | | |
| | C-8-2 | | | | | |
| | C-9-2 | | | | | |
| | C-10 | | | | | |
| Urethane-forming catalyst (parts by mass) | LH-10 | 0.2262 | 0.1971 | 0.1592 | 0.2360 | 0.2093 |
| External emulsifier (parts by mass) | N707-SF | | | | | |
| Water (parts by mass) | | | 6.3 | 5.4 | 7.2 | 6.5 |
| X/n(A) | mass ratio | 0.3 | 1.0 | 0.9 | 0.7 | 0.3 |
| Amount of X | % by mass | 1.5 | 1.0 | 1.9 | 1.4 | 1.6 |

Table 22

| | | Example 58 | Example 59 | Example 60 | Example 61 | Example 62 |
|---|---|---|---|---|---|---|
| One-component coating composition | | D-a35 | D-a36 | D-a37 | D-a38 | D-a39 |
| Main agent (parts by mass) | SETAQUA 6510 | 10.0 | 10.0 | 10.0 | 10.0 | 10.0 |
| Blocking agent (parts by mass) | BL-a10 | | | | | |
| | BL-a11 | | | | | |
| | BL-a12 | | | | | |
| | BL-a13 | | | | | |
| | BL-a14 | | | | | |
| | BL-a15 | 8.8 | | | | |
| | BL-a16 | | 6.3 | | | |
| | BL-a17 | | | 16.0 | | |
| | BL-a18 | | | | 17.7 | |
| | BL-a19 | | | | | 19.1 |
| | BL-a20 | | | | | |
| | BL-a21 | | | | | |
| Carboxylate salt (parts by mass) | C-1 | | | | | |
| | C-2 | | | | | |
| | C-3 | | | | | |
| | C-4-2 | 0.2 | | | | |
| | C-5-2 | | 0.1 | | | |
| | C-6-2 | | | | | |
| | C-7-2 | | | | | |
| | C-8-2 | | | | | |
| | C-9-2 | | | | | |
| | C-10 | | | | | |
| Urethane-forming catalyst (parts by mass) | LH-10 | 0.2651 | 0.1889 | 0.2403 | 0.2654 | 0.2865 |
| External emulsifier (parts by mass) | N707-SF | | | | | |
| Water (parts by mass) | | 7.9 | 6.2 | | | |
| X/n(A) | mass ratio | 0.3 | 0.7 | 0.9 | 0.3 | 0.7 |
| Amount of X | % by mass | 0.8 | 1.3 | 5.1 | 0.8 | 1.2 |

Table 23

| | | Example 63 | Example 64 | Example 65 | Example 66 | Example 67 |
|---|---|---|---|---|---|---|
| One-component coating composition | | D-a40 | D-a41 | D-a42 | D-a43 | D-a44 |
| Main agent (parts by mass) | SETAQUA 6510 | 10.0 | 10.0 | 10.0 | 10.0 | 10.0 |

(continued)

| | | Example 63 | Example 64 | Example 65 | Example 66 | Example 67 |
|---|---|---|---|---|---|---|
| One-component coating composition | | D-a40 | D-a41 | D-a42 | D-a43 | D-a44 |
| Blocking agent (parts by mass) | BL-a10 | | | | | |
| | BL-a11 | | | | | |
| | BL-a12 | | | | | |
| | BL-a13 | | | 7.9 | 7.9 | 7.9 |
| | BL-a14 | | | | | |
| | BL-a15 | | | | | |
| | BL-a16 | | | | | |
| | BL-a17 | | | | | |
| | BL-a18 | | | | | |
| | BL-a19 | | | | | |
| | BL-a20 | 8.0 | | | | |
| | BL-a21 | | 7.2 | | | |
| Carboxylate salt (parts by mass) | C-1 | | | | | |
| | C-2 | | | | | |
| | C-3 | | | | | |
| | C-4-2 | | | | | |
| | C-5-2 | 0.1 | | | | |
| | C-6-2 | | 0.04 | | | |
| | C-7-2 | | | 0.6 | | |
| | C-8-2 | | | | 0.1 | |
| | C-9-2 | | | | | 0.1 |
| | C-10 | | | | | |
| Urethane-forming catalyst (parts by mass) | LH-10 | 0.2401 | 0.2149 | 0.2359 | 0.2359 | 0.2359 |
| External emulsifier (parts by mass) | N707-SF | | | | | |
| Water (parts by mass) | | 7.4 | 6.9 | 6.8 | 7.3 | 7.3 |
| X/n(A) | mass ratio | 0.7 | 0.5 | 0.3 | 2.2 | 0.1 |
| Amount of X | % by mass | 0.8 | 0.3 | 2.8 | 1.9 | 0.2 |

Table 24

| | | Example 68 | Example 69 | Example 70 | Example 71 | Example 72 |
|---|---|---|---|---|---|---|
| One-component coating composition | | D-a45 | D-a46 | D-a47 | D-a48 | D-a49 |
| Main agent (parts by mass) | SETAQUA 6510 | 10.0 | 10.0 | 10.0 | 10.0 | 10.0 |

(continued)

| | | Example 68 | Example 69 | Example 70 | Example 71 | Example 72 |
|---|---|---|---|---|---|---|
| One-component coating composition | | D-a45 | D-a46 | D-a47 | D-a48 | D-a49 |
| Blocking agent (parts by mass) | BL-a10 | | | | | |
| | BL-a11 | | | | | |
| | BL-a12 | | | | | |
| | BL-a13 | 7.9 | 7.9 | 7.9 | 7.9 | 7.9 |
| | BL-a14 | | | | | |
| | BL-a15 | | | | | |
| | BL-a16 | | | | | |
| | BL-a17 | | | | | |
| | BL-a18 | | | | | |
| | BL-a19 | | | | | |
| | BL-a20 | | | | | |
| | BL-a21 | | | | | |
| Carboxylate salt (parts by mass) | C-1 | | | | | |
| | C-2 | | | | | |
| | C-3 | | | | | |
| | C-4-2 | | 0.4 | | | 0.3 |
| | C-5-2 | | | 0.1 | | |
| | C-6-2 | | | | 0.3 | |
| | C-7-2 | | | | | |
| | C-8-2 | | | | | |
| | C-9-2 | | | | | |
| | C-10 | 0.9 | | | | |
| Urethane-forming catalyst (parts by mass) | LH-10 | 0.2359 | 0.2359 | 0.2359 | 0.2359 | |
| External emulsifier (parts by mass) | N707-SF | | | | | |
| Water (parts by mass) | | 6.5 | 7.0 | 7.2 | 7.1 | 7.3 |
| X/n(A) | mass ratio | 0.5 | 0.3 | 0.7 | 0.5 | 0.3 |
| Amount of X | % by mass | 1.5 | 2.1 | 1.1 | 1.9 | 1.6 |

Table 25

| | | Example 73 | Example 74 | Example 75 | Example 76 | Example 77 | Example 78 |
|---|---|---|---|---|---|---|---|
| One-component coating composition | | D-a50 | D-a51 | D-a52 | D-a53 | D-a54 | D-a55 |
| Main agent (parts by mass) | SETAQUA 6510 | 10.0 | | 10.0 | 10.0 | 10.0 | 10.0 |

(continued)

| | | Example 73 | Example 74 | Example 75 | Example 76 | Example 77 | Example 78 |
|---|---|---|---|---|---|---|---|
| One-component coating composition | | D-a50 | D-a51 | D-a52 | D-a53 | D-a54 | D-a55 |
| Blocking agent (parts by mass) | BL-a10 | | 15.1 | | | | |
| | BL-a11 | | | | | | |
| | BL-a12 | | | | | | |
| | BL-a13 | 7.9 | | | | | |
| | BL-a14 | | | | | | |
| | BL-a15 | | | | | | |
| | BL-a16 | | | 6.3 | | 6.3 | 6.3 |
| | BL-a17 | | | | | | |
| | BL-a18 | | | | | | |
| | BL-a19 | | | | | | |
| | BL-a20 | | | | | | |
| | BL-a21 | | | | | | |
| | BL-a22 | | | | 6.8 | | |
| Carboxylate salt (parts by mass) | C-1 | | | | | | |
| | C-2 | | | | | | |
| | C-3 | | | | | | |
| | C-4-2 | | | | | | |
| | C-5-2 | 0.2 | | | | | |
| | C-6-2 | | | | | | |
| | C-7-2 | | | | | | |
| | C-8-2 | | | | | | |
| | C-9-2 | | | | | | |
| | C-10 | | 1.9 | 1.9 | 1.9 | 1.0 | 1.9 |
| Urethane-forming catalyst (parts by mass) | LH-10 | | 0.2262 | 0.1889 | 0.2034 | 0.1889 | |
| External emulsifier (parts by mass) | N707-SF | | | | | | |
| Water (parts by mass) | | 7.4 | | 4.4 | 4.8 | 5.3 | 5.5 |
| X/n(A) | mass ratio | 0.7 | 0.5 | 0.5 | 0.5 | 0.5 | 0.5 |
| Amount of X | % by mass | 1.9 | 3.5 | 4.2 | 3.8 | 2.2 | 4.2 |

Table 26

| | | Example 79 | Example 80 |
|---|---|---|---|
| One-component coating composition | | D-a56 | D-a57 |
| Main agent (parts by mass) | SETAQUA 6510 | 10.0 | 10.0 |

EP 4 008 757 B1

(continued)

|  |  | Example 79 | Example 80 |
|---|---|---|---|
| One-component coating composition | | D-a56 | D-a57 |
| Blocking agent (parts by mass) | BL-a10 | | |
| | BL-a11 | | |
| | BL-a12 | | |
| | BL-a13 | | |
| | BL-a14 | | |
| | BL-a15 | | |
| | BL-a16 | 6.3 | 6.3 |
| | BL-a17 | | |
| | BL-a18 | | |
| | BL-a19 | | |
| | BL-a20 | | |
| | BL-a21 | | |
| Carboxylate salt (parts by mass) | C-1 | | |
| | C-2 | | |
| | C-3 | | |
| | C-4-2 | | |
| | C-5-2 | | |
| | C-6-2 | | |
| | C-7-2 | | |
| | C-8-2 | | |
| | C-9-2 | | |
| | C-10 | 3.9 | 1.9 |
| Urethane-forming catalyst (parts by mass) | LH-10 | 0.1889 | 0.1889 |
| External emulsifier (parts by mass) | N707-SF | | 0.0315 |
| Water (parts by mass) | | 2.4 | 4.4 |
| X/n(A) | mass ratio | 0.5 | 0.5 |
| Amount of X | % by mass | 8.4 | 4.2 |

Table 27

|  |  | Comparative Example 7 | Comparative Example 8 | Comparative Example 9 | Comparative Example 10 |
|---|---|---|---|---|---|
| One-component coating composition | | D-b6 | D-b7 | D-b8 | D-b10 |
| Main agent (parts by mass) | SETAQUA 6510 | 10.0 | 10.0 | 10.0 | 10.0 |

(continued)

| | | Comparative Example 7 | Comparative Example 8 | Comparative Example 9 | Comparative Example 10 |
|---|---|---|---|---|---|
| One-component coating composition | | D-b6 | D-b7 | D-b8 | D-b10 |
| Blocking agent (parts by mass) | BL-a10 | 15.1 | | | |
| | BL-a11 | | | | |
| | BL-a12 | | | | |
| | BL-a13 | | 7.9 | 7.9 | |
| | BL-a14 | | | | |
| | BL-a15 | | | | |
| | BL-a16 | | | | 6.3 |
| | BL-a17 | | | | |
| | BL-a18 | | | | |
| | BL-a19 | | | | |
| | BL-a20 | | | | |
| | BL-a21 | | | | |
| Carboxylate salt (parts by mass) | C-1 | | | | |
| | C-2 | | | | |
| | C-3 | | | | |
| | C-4-2 | | | | |
| | C-5-2 | | | | |
| | C-6-2 | | | | |
| | C-7-2 | | | | |
| | C-8-2 | | | | |
| | C-9-2 | | | | |
| | C-10 | | | | 9.7 |
| Urethane-forming catalyst (parts by mass) | LH-10 | | | 0.2359 | 0.1889 |
| External emulsifier (parts by mass) | N707-SF | | | | |
| Water (parts by mass) | | | 7.6 | 7.4 | |
| X/n(A) | mass ratio | 0.0 | 0.0 | 0.0 | 0.5 |
| Amount of X | % by mass | 0.0 | 0.0 | 0.0 | 21.1 |

Table 28

| | | Example 53 | Example 54 | Example 55 | Example 56 | Example 57 |
|---|---|---|---|---|---|---|
| Evaluation | Curability at a low temperature | △ | ◎ | ◎ | ◎ | ○ |
| | Storage stability | ○ | ○ | ○ | ○ | ○ |
| | External appearance of coating film | ○ | ○ | ○ | ○ | ○ |
| | Solvent resistance (80°C) Ethanol | × | △ | △ | △ | △ |
| | Solvent resistance (80°C) Xylene | × | △ | △ | △ | △ |
| | Solvent resistance (100°C) Ethanol | △ | — | — | — | — |
| | Solvent resistance(100°C) Xylene | △ | — | — | — | — |

Table 29

| | | Example 58 | Example 59 | Example 60 | Example 61 | Example 62 |
|---|---|---|---|---|---|---|
| Evaluation | Curability at a low temperature | ◎ | ◎ | ◎ | ◎ | ◎ |
| | Storage stability | ○ | ○ | ○ | ○ | ○ |
| | External appearance of coating film | ○ | ○ | ◎ | ◎ | ◎ |
| | Solvent resistance (80°C) Ethanol | △ | △ | △ | △ | △ |
| | Solvent resistance (80°C) Xylene | △ | △ | △ | △ | △ |

Table 30

| | | Example 63 | Example 64 | Example 65 | Example 66 | Example 67 |
|---|---|---|---|---|---|---|
| Evaluation | Curability at a low temperature | ◎ | ◎ | △ | ◎ | △ |
| | Storage stability | ○ | ○ | △ | ○ | ○ |
| | External appearance of coating film | ○ | ○ | ○ | ○ | ○ |
| | Solvent resistance (80°C) Ethanol | △ | △ | △ | △ | △ |
| | Solvent resistance (80°C) Xylene | △ | △ | △ | △ | △ |

Table 31

| | | Example 68 | Example 69 | Example 70 | Example 71 | Example 72 |
|---|---|---|---|---|---|---|
| Evaluation | Curability at a low temperature | △ | ◎ | ◎ | ◎ | ○ |
| | Storage stability | ○ | △ | ○ | ○ | ○ |
| | External appearance of coating film | ○ | ○ | ○ | ○ | ○ |
| | Solvent resistance (80°C) Ethanol | ○ | △ | △ | △ | △ |
| | Solvent resistance (80°C) Xylene | ○ | △ | △ | △ | △ |

Table 32

| | | Example 73 | Example 74 | Example 75 | Example 76 | Example 77 | Example 78 |
|---|---|---|---|---|---|---|---|
| Evaluation | Curability at a low temperature | ○ | △ | ◎ | ◎ | ◎ | ◎ |
| | Storage stability | ○ | ○ | ○ | ○ | ○ | ○ |
| | External appearance of coating film | ○ | ○ | ○ | ○ | ○ | ○ |
| | Solvent resistance (80°C) Ethanol | △ | × | ○ | ○ | ○ | ○ |

| | | | | | | |
|---|---|---|---|---|---|---|
| Solvent resistance (80°C) Xylene | △ | × | △ | ○ | ○ | ○ |
| Solvent resistance (100°C) Ethanol | — | ○ | — | — | — | — |
| Solvent resistance (100°C) Xylene | — | ○ | — | — | — | — |

Table 33

| | | Example 79 | Example 80 | Comparative Example 7 | Comparative Example 8 | Comparative Example 9 | Comparative Example 10 |
|---|---|---|---|---|---|---|---|
| Evaluation | Curability at a low temperature | ◎ | ◎ | × | × | × | × |
| | Storage stability | ○ | ○ | ○ | ○ | ○ | × |
| | External appearance of coating film | ○ | ◎ | ○ | ○ | ○ | × |
| | Solvent resistance (80°C) Ethanol | ○ | ○ | × | × | × | × |
| | Solvent resistance (80°C) Xylene | ○ | ○ | × | × | × | × |

As shown in Tables 21 to 33, the curability at a low temperature when made into a coating film of the one-component coating compositions D-a30 to D-a57, each including: both a blocked polyisocyanate derived from a polyisocyanate, a hydrophilic compound and either a pyrazole-based blocking agent or a triazole-based blocking agent; and a carboxylate salt, was favorable. In addition, the external appearance of the coating film formed therefrom was also excellent.

Among the one-component coating compositions D-a42 to D-a48 in which the type and the formulation amount of the carboxylate salt were different from each other (Examples 65 to 71), the curability at a low temperature when made into coating film of the one-component coating compositions D-a43 and D-a46 to D-a48 (Examples 66 and 69 to 71) in which cesium acetate, sodium propionate, potassium acetate or potassium propionate was used as a carboxylate salt was particularly favorable, and the storage stability of the one-component coating compositions D-a43 to D-a45 and D-a47 to D-a48 (Examples 66 to 68 and 70 to 71) in which the amount of the counter cation (X) was less than 2.0 was further favorable.

Among the one-component coating compositions D-a42 to D-a45 in which the type and the formulation amount of the carboxylate salt were different from each other (Examples 65 to 68), the solvent resistance of the one-component coating composition D-a45 (Example 68) in which a trivalent metal salt was used as a carboxylate salt was further favorable.

Among the one-component coating compositions D-a46, D-a47, D-a49 and D-a50 in which the presence or the absence of the urethane-forming catalyst was different from each other (Examples 69, 70, 72 and 73), the curability at a low temperature when made into a coating film of the one-component coating compositions D-a46 and D-a47 (Examples 69 and 70) in which the urethane-forming catalyst was formulated was particularly favorable.

In contrast, in the one-component coating compositions D-b6 to D-b8 each in which a blocked polyisocyanate derived from a polyisocyanate, a hydrophilic compound and either a pyrazole-based blocking agent or a triazole-based blocking agent was contained but no carboxylate salt was contained (Comparative Examples 7 to 9), both the storage stability and the external appearance when made into a coating film thereof was favorable, but the curability at a low temperature or the solvent resistance when made into a coating film thereof was unfavorable.

INDUSTRIAL APPLICABILITY

The blocked polyisocyanate composition and the one-component coating composition according to the present embodiment make it possible to provide a blocked polyisocyanate composition and a one-component coating composition having favorable curability at a low temperature when made into a coating film. The one-component coating composition of the present embodiment is preferably used as a primer, intermediate, or upper coating material to be applied on a material such as metal, plastic, or inorganic material. The one-component coating composition of the present embodiment is preferably used to impart an aesthetically pleasing appearance, weather resistance, acid resistance, rust resistance, chipping resistance, adhesiveness, or the like, to a precoat metal such as an anti-rust steel plate, a vehicle coated part, a plastic-coated part, or the like. The one-component coating composition of the present embodiment is also useful as a urethane feedstock such as an adhesive, tackifier, elastomer, foam, or surface-treating agent.

**Claims**

1. A blocked polyisocyanate composition, comprising: a blocked polyisocyanate derived from a polyisocyanate and a blocking agent; and at least one organic acid salt, wherein the blocking agent comprises a compound having a heterocyclic ring comprising at least three nitrogen atoms,

   wherein the organic acid salt is a carboxylate salt,
   an amount of a counter cation of the carboxylate salt relative to a total mass of the blocked polyisocyanate is 0.1% by mass to 20% by mass, and
   the carboxylate salt is a metal carboxylate salt.

2. The blocked polyisocyanate composition according to claim 1, wherein the blocking agent is a triazole-based blocking agent.

3. The blocked polyisocyanate composition according to claim 1 or 2, wherein a molar ratio of active hydrogen groups in the blocking agent relative to one isocyanate group in the polyisocyanate is 0.5 to 3.0.

4. The blocked polyisocyanate composition according to claim any one of claims 1 to 3, wherein a metal of the metal carboxylate salt is a monovalent or trivalent metal.

5. The blocked polyisocyanate composition according to claim 4, wherein the metal of the metal carboxylate salt is a monovalent metal.

6. The blocked polyisocyanate composition according to claim 4, wherein the metal of the metal carboxylate salt is a trivalent metal.

7. The blocked polyisocyanate composition according to any one of claims 1 to 6, further comprising at least one surfactant.

8. A one-component coating composition comprising: a blocked polyisocyanate composition of any one of claims 1 to 7; and a polyvalent active hydrogen compound.

9. The one-component coating composition according to claim 8, further comprising a urethane-forming catalyst.

10. A coating film formed by curing a one-component coating composition of claim 8 or 9.

11. A coated article comprising a coating film of claim 10.

**EP 4 008 757 B1**

**Patentansprüche**

1. Zusammensetzung von blockiertem Polyisocyanat, umfassend: ein blockiertes Polyisocyanat, welches von einem Polyisocyanat und einem Blockierungsmittel abgeleitet ist, und mindestens ein Salz einer organischen Säure, wobei das Blockierungsmittel eine Verbindung mit einem heterocyclischen Ring, der mindestens drei Stickstoffatome enthält, umfasst,

   wobei das Salz einer organischen Säure ein Carboxylatsalz ist,
   die Menge eines Gegenkations des Carboxylatsalzes im Verhältnis zur Gesamtmasse des blockierten Polyisocyanats 0,1 Massen-% bis 20 Massen-% beträgt, und
   das Carboxylatsalz ein Metallcarboxylatsalz ist.

2. Zusammensetzung von blockiertem Polyisocyanat nach Anspruch 1, wobei das Blockierungsmittel ein Triazol-basiertes Blockierungsmittel ist.

3. Zusammensetzung von blockiertem Polyisocyanat nach Anspruch 1 oder 2, wobei ein Molverhältnis von aktiven Wasserstoffgruppen in dem Blockierungsmittel im Verhältnis zu einer Isocyanatgruppe in dem Polyisocyanat 0,5 bis 3,0 ist.

4. Zusammensetzung von blockiertem Polyisocyanat nach einem der Ansprüche 1 bis 3, wobei ein Metall des Metallcarboxylatsalzes ein einwertiges oder dreiwertiges Metall ist.

5. Zusammensetzung von blockiertem Polyisocyanat nach Anspruch 4, wobei das Metall des Metallcarboxylatsalzes ein einwertiges Metall ist.

6. Zusammensetzung von blockiertem Polyisocyanat nach Anspruch 4, wobei das Metall des Metallcarboxylatsalzes ein dreiwertiges Metall ist.

7. Zusammensetzung von blockiertem Polyisocyanat nach einem der Ansprüche 1 bis 6, weiter umfassend mindestens ein Tensid.

8. Einkomponentige Beschichtungszusammensetzung, umfassend: eine Zusammensetzung von blockiertem Polyisocyanat nach einem der Ansprüche 1 bis 7; und eine mehrwertige aktive Wasserstoffverbindung.

9. Einkomponentige Beschichtungszusammensetzung nach Anspruch 8, weiterhin umfassend einen Urethan-bildenden Katalysator.

10. Beschichtungsfilm/-folie, welche(r) durch Härten einer einkomponentigen Beschichtungszusammensetzung nach Anspruch 8 oder 9 gebildet ist.

11. Beschichteter Gegenstand, umfassend eine Beschichtungsfolie/einen Beschichtungsfilm nach Anspruch 10.

**Revendications**

1. Composition de polyisocyanate bloqué, comprenant : un polyisocyanate bloqué dérivé d'un polyisocyanate et d'un agent de blocage ; et au moins un sel d'acide organique, dans laquelle l'agent de blocage comprend un composé ayant un cycle hétérocyclique comprenant au moins trois atomes d'azote,

   dans laquelle le sel d'acide organique est un sel de carboxylate,
   une quantité d'un contre-cation du sel de carboxylate par rapport à une masse totale du polyisocyanate bloqué est de 0,1 % en masse à 20 % en masse, et
   le sel de carboxylate est un sel de carboxylate métallique.

2. Composition de polyisocyanate bloqué selon la revendication 1, dans laquelle l'agent de blocage est un agent de blocage à base de triazole.

3. Composition de polyisocyanate bloqué selon la revendication 1 ou 2, dans laquelle un rapport molaire de groupes hydrogène actif dans l'agent de blocage par rapport à un groupe isocyanate dans le polyisocyanate est de 0,5 à 3,0.

4. Composition de polyisocyanate bloqué selon l'une quelconque des revendications 1 à 3, dans laquelle un métal du sel de carboxylate métallique est un métal monovalent ou trivalent.

5. Composition de polyisocyanate bloqué selon la revendication 4, dans laquelle le métal du sel de carboxylate métallique est un métal monovalent.

6. Composition de polyisocyanate bloqué selon la revendication 4, dans laquelle le métal du sel de carboxylate métallique est un métal trivalent.

7. Composition de polyisocyanate bloqué selon l'une quelconque des revendications 1 à 6, comprenant en outre au moins un agent tensioactif.

8. Composition de revêtement à un composant comprenant : une composition de polyisocyanate bloqué selon l'une quelconque des revendications 1 à 7 ; et un composé à hydrogène actif polyvalent.

9. Composition de revêtement à un composant selon la revendication 8, comprenant en outre un catalyseur formant de l'uréthane.

10. Film de revêtement formé par durcissement d'une composition de revêtement à un composant selon la revendication 8 ou 9.

11. Article revêtu comprenant un film de revêtement selon la revendication 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0159117 A
- WO 2018073299 A1
- US 2012238697 A1
- US 2003236360 A1
- WO 2014112165 A1
- US 2018282574 A1
- JP 2016089028 A
- JP 2016138202 A
- JP H10330454 A
- JP SHO5734107 A
- JP SHO61275311 A